# EUROPEAN PATENT APPLICATION

(11) **EP 4 807 871 A1**
(43) Date of publication of application: **16.09.2026**
(21) Application number: 25759043.0
(22) Date of filing: 23.01.2025
(51) Int. Cl.: H01M 50/233, H01M 50/211

(54) **BATTERY DEVICE AND ELECTRIC DEVICE**

(71) Applicant: Contemporary Amperex Technology (Hong Kong) Limited, Central, Hong Kong (HK)
(72) Inventor: WANG, Yalei, Ningde, Fujian 352100 (CN); WANG, Liangyi, Ningde, Fujian 352100 (CN); ZHOU, Huiping, Ningde, Fujian 352100 (CN); QIN, Feng, Ningde, Fujian 352100 (CN); WANG, Peng, Ningde, Fujian 352100 (CN)
(74) Representative: Gong, Jinping
(86) International application number: PCT/CN2025/074349
(87) International publication number: WO 2026/156609

(57) **Abstract**

Disclosed are a battery apparatus (100) and an electric apparatus. The battery apparatus includes a case (10), a pouch battery cell assembly (20), and an electrical member (60), where the pouch battery cell assembly (20) includes a plurality of pouch battery cells (30) arranged along a first direction, each pouch battery cell (30) is bonded to the case (10) and includes a packaging bag (31) and electrode leads (33), and the electrode leads (33) are respectively disposed at end parts of the packaging bag (31) along a second direction; all the electrode leads (33) of the plurality of pouch battery cells (30) of the pouch battery cell assembly (20) located at the same side are sequentially arranged along the first direction, and along a third direction, an accommodating gap (201) is formed between a plurality of electrode leads (33) and an end part of the pouch battery cell assembly (20); the electrical member (60) is disposed in the accommodating gap (201) and electrically connected to the electrode leads (33); every two of the first direction, the second direction, and the third direction are arranged at an included angle to each other.

## Description

### TECHNICAL FIELD

The present application relates to the technical field of batteries, and in particular, to a battery apparatus and an electric apparatus.

### BACKGROUND

In the related art, a battery apparatus generally includes a plurality of pouch battery cells, and the plurality of pouch battery cells arranged in a case. To collect parameters such as the voltage or current of the pouch battery cells for reference by a battery management system, the end part of each pouch battery cell is electrically connected to a battery monitoring unit. In a battery apparatus, the energy density of the battery apparatus is an important parameter, and therefore, how to reasonably arrange the positions of elements such as the battery monitoring unit to enable the structure of the battery apparatus to be compact and reduce the volume of the battery apparatus and thereby improve the energy density of the battery apparatus is a technical problem to be solved.

### SUMMARY

In view of the above problems, the present application provides a battery apparatus and an electric apparatus, and at least the energy density of the battery apparatus can be improved.

In a first aspect, the present application provides a battery apparatus. The battery apparatus includes a case, a pouch battery cell assembly, and an electrical member, where the pouch battery cell assembly includes a plurality of pouch battery cells arranged along a first direction, each pouch battery cell is bonded to the case and includes a packaging bag and electrode leads, and the electrode leads are respectively disposed at the end parts of the packaging bag along a second direction; all the electrode leads of the plurality of pouch battery cells of the pouch battery cell assembly located at the same side are sequentially arranged along the first direction, and along a third direction, an accommodating gap is formed between a plurality of electrode leads and the end part of the pouch battery cell assembly; the electrical member is disposed in the accommodating gap and electrically connected to the electrode leads; every two of the first direction, the second direction, and the third direction are arranged at an included angle to each other.

In the pouch battery cell assembly of the battery apparatus according to the embodiments of the present application, the plurality of pouch battery cells are arranged along the first direction, the end parts of the pouch battery cell along the second direction are respectively provided with the electrode leads, all the electrode leads of the plurality of pouch battery cells located on the same side are sequentially arranged along the first direction, and form the accommodating gap together with the end part of the pouch battery cell assembly in the third direction, and the electrical member is disposed in the accommodating gap and connected to the electrode leads, such that the electrical member can use the accommodating gap as the installation space, thereby making the structure of the battery apparatus more compact, saving space, and thus further contributing to improving the energy density of the battery apparatus.

According to some embodiments of the present application, optionally, the electrical member includes a battery monitoring unit and/or an electrical connecting member.

In the above technical solution, the electrical member includes the battery monitoring unit and/or the electrical connecting member, the electrical member may be electrically connected to the electrode leads through one of the battery monitoring unit and the electrical connecting member, and the battery monitoring unit and/or the electrical connecting member may be electrically connected to the pouch battery cells through the electrode leads, such that the battery management system can monitor and adjust the pouch battery cell assembly through the electrical member. In addition, the electrical member may further obtain parameters of the pouch battery cells for the battery management system to refer to for the management strategy.

According to some embodiments of the present application, optionally, the electrical member includes a battery monitoring unit and an electrical connecting member, the electrical connecting member is located between the electrode leads and the battery monitoring unit, and the electrical connecting member electrically connects the battery monitoring unit and the electrode leads.

In the above technical solution, the electrical connecting member is located between the electrode leads and the battery monitoring unit and connects the electrode leads and the battery monitoring unit, such that the electrode leads of the plurality of pouch battery cells can be connected to the battery monitoring unit through the electrical connecting member, the space of the accommodating gap in the third direction is further utilized, the structure is more compact, and the installation space required by the battery monitoring unit is saved while the electrical connection between the battery monitoring unit and the plurality of pouch battery cells is realized.

According to some embodiments of the present application, optionally, the battery apparatus includes a main control panel, the electrical member includes a battery monitoring unit, and the battery monitoring unit is electrically connected to the main control panel.

In the above technical solution, the battery apparatus includes the main control panel, the electrical member includes the battery monitoring unit, the battery monitoring unit is electrically connected to the main control panel, and the battery monitoring unit can collect the parameters of the pouch battery cells, such that the main control panel can accurately and reliably obtain the parameters of the pouch battery cells and timely adjust the control strategy for the battery apparatus based on the state battery cell of the pouch battery cells.

According to some embodiments of the present application, optionally, the case includes a bottom plate, and the accommodating gap is located between the bottom plate and the electrode leads.

In the above technical solution, the battery apparatus receives the pouch battery cell assembly through the case, the case can support and protect the pouch battery cells, and the accommodating gap is located between the bottom plate of the case and the electrode leads, such that the boundary range of the accommodating gap in the third direction is clear, and the bottom plate can support the electrical member in the accommodating gap, and thereby the electrical member is more stably installed in the accommodating gap.

According to some embodiments of the present application, optionally, the battery apparatus includes a support connected to the case, and the electrical member is installed on the support.

In the above technical solution, by allowing the support to be connected to the case and allowing the electrical member to be installed on the support, the electrical member can be connected to the case through the support, thereby increasing the installation stability and reliability of the electrical member and being beneficial to improving the overall rigidity and strength of the battery apparatus.

According to some embodiments of the present application, optionally, the electrical member is bonded to the case wall of the case.

In the above technical solution, by allowing the electrical member to be bonded to the case wall of the case, the electrical member is connected to the case wall of the case to form a whole, which is beneficial to the integration of the electrical member and the case, saves the space, facilitates the assembling of internal components and parts of the battery apparatus, and also helps to provide insulation and isolation protection between the electrical member and the case.

According to some embodiments of the present application, optionally, the electrical member includes a battery monitoring unit, and the length of the battery monitoring unit extends along the first direction.

In the above technical solution, the length of the battery monitoring unit extends along the first direction, and the accommodating gap also extends along the first direction, such that the battery monitoring unit can fully fill the space where the accommodating gap is located, and the space utilization rate is improved.

According to some embodiments of the present application, optionally, a plurality of pouch battery cell assemblies are provided, the plurality of the pouch battery cell assemblies are arranged along the second direction, and the electrical member is disposed between two pouch battery cell assemblies or disposed at one side of all the pouch battery cell assemblies.

In the above technical solution, a plurality of pouch battery cell assemblies are provided, such that the overall output voltage of battery apparatus can be increased; along the second direction, the electrical member is disposed between two pouch battery cell assemblies or on one side of all the pouch battery cell assemblies, such that the structure becomes compact and the space in the second direction is saved.

According to some embodiments of the present application, optionally, the electrical member includes a battery monitoring unit, and at least one electrode lead of each pouch battery cell is electrically connected to the battery monitoring unit through a conductive member.

In the above technical solution, at least one electrode lead of each pouch battery cell is electrically connected to the battery monitoring unit through the conductive member, such that the battery monitoring unit can establish an electrical connection with each pouch battery cell, and thus the battery monitoring unit can monitor the state of each pouch battery cell, thus improving the fineness of the monitoring and management performed by the battery management system.

According to some embodiments of the present application, optionally, a corner space is formed at the corner of the packaging bag along the third direction, the conductive member is at least partially located in the corner space, and the conductive member extends along the second direction.

In the above technical solution, the corner space is formed at the corner of the packaging bag along the third direction, the conductive member is at least partially located in the corner space, the conductive component extends along the second direction, and the corner of the packaging bag along the third direction also extends along the second direction, such that the conductive member can extend in the corner space, thereby fully using the volume space occupied by the pouch battery cell to accommodate the conductive member and improving the space utilization rate.

According to some embodiments of the present application, optionally, the conductive member includes a first end part and a second end part opposite to each other, the first end part is welded or bonded to the electrode lead, and the second end part is electrically connected to the battery monitoring unit.

In the above technical solution, by allowing the first end part of the conductive member to be welded or bonded to the electrode lead, the stability of the connection between the first end part of the conductive member and the electrode lead can be improved; the second end part is electrically connected to the battery monitoring unit, such that the first end part of the conductive member can sample the voltage of the connected pouch battery cell, and the voltage information acquired by sampling is transmitted to the battery monitoring unit through the second end part, thereby ensuring the accuracy and stability of sampling. The conductive member enables voltage sampling while realizing electrical connection, and thus the number of components and parts can be reduced and the installation space can be saved.

According to some embodiments of the present application, optionally, the electrical member includes an electrical connecting member, the battery apparatus includes first patch cords and a second patch cord, the first patch cords and the second patch cord are all connected to the electrical connecting member, the second end parts of a plurality of conductive members are connected to the electrical connecting member through corresponding first patch cords, and an end of the second patch cord distal to the electrical connecting member is connected to the battery monitoring unit.

In the above technical solution, the second end parts of the plurality of conductive members are connected to the electrical connecting member through corresponding first patch cords, and an end of the second patch cord distal to the electrical connecting member is connected to the battery monitoring unit, such that the plurality of conductive members are gathered and then connected to the battery monitoring unit, thereby simplifying the electrical connection line between the conductive members and the battery monitoring unit and facilitating the identification, assembling, and maintenance while saving the installation space.

According to some embodiments of the present application, optionally, the second patch cord has a first connector connected at an end thereof distal to the electrical connecting member, the battery monitoring unit is provided with a second connector, and the first connector is in plug connection with the second connector.

In the above technical solution, the second patch cord has the first connector connected at an end thereof distal to the electrical connecting member, the battery monitoring unit is provided with the second connector, and the first connector is in plug connection with the second connector, such that the connection or disconnection of the circuit between the battery monitoring unit and the second patch cord can be realized by plugging or unplugging the first connector or the second connector, and this is easy to operate and is beneficial to improving the assembly efficiency of the battery apparatus.

According to some embodiments of the present application, optionally, the conductive member is at least one of a flexible circuit board and a wire harness.

In the above technical solution, the conductive member is at least one of a flexible circuit board and a wire harness, and the conductive member has good flexibility, such that the conductive members have good adaptability when arranged in the irregular structural space between the end parts of the plurality of packaging bags and the electrical member, and this is beneficial to saving the installation space of the conductive members.

According to some embodiments of the present application, optionally, the electrical member includes a battery monitoring unit, all the pouch battery cells are arranged in series, and the battery monitoring unit acquires parameters of the pouch battery cells through sampling parts connected to the electrode leads.

In the above technical solution, by allowing all the pouch battery cells to be connected in series, the battery apparatus can have relatively high output voltage, and all the pouch battery cells form a unidirectional current path after being connected in series, thus facilitating the acquisition of the parameters of the pouch battery cells by the sampling parts and also being beneficial to simplifying the algorithm by which the battery management system processes the acquired parameters of the pouch battery cells.

According to some embodiments of the present application, optionally, on the current path, the number of pouch battery cells between at least two adjacent sampling parts is greater than or equal to two.

In the above technical solution, two adjacent sampling parts on the current path can acquire parameters of the pouch battery cells between the two sampling parts, and there are at least two adjacent sampling parts in the battery apparatus that can acquire parameters of two or more pouch battery cells, such that the number of sampling parts can be correspondingly reduced, the wire harnesses connected to the sampling parts can also be shortened and simplified, and thus the installation space is saved and the cost can also be reduced to some extent.

According to some embodiments of the present application, optionally, on the current path, the two electrode leads of the first pouch battery cell and those of the last pouch battery cell all have a sampling part connected.

In the above technical solution, on the current path, the electrode leads of the first pouch battery cell and the last pouch battery cell all have the sampling parts connected, such that the parameters of the first pouch battery cell and the last pouch battery cell can be acquired by the sampling parts, the comprehensiveness of sampling is ensured, and thereby the reliability of the management strategy of the battery management system is improved.

According to some embodiments of the present application, optionally, on the current path, between the first pouch battery cell and the last pouch battery cell, there are two pouch battery cells between two adjacent sampling parts.

In the above technical solution, on the current path, between the first pouch battery cell and the last pouch battery cell, there are two pouch battery cells between two adjacent sampling parts. Compared with the case where the sampling parts are separately provided at both ends of each pouch battery cell, the number of sampling parts is reduced, and the sampling parts can be connected to the battery monitoring unit by using a relatively short wire harness, such that the installation space is saved, and the cost can be reduced to some extent.

According to some embodiments of the present application, optionally, at least one electrode lead of each pouch battery cell is electrically connected to the battery monitoring unit through a conductive member, the conductive member includes a first end part and a second end part opposite to each other, and the first end part forms the sampling part.

In the above technical solution, at least one electrode lead of each pouch battery cell is electrically connected to the battery monitoring unit through the conductive member, and the second end part of the conductive member forms a sampling part and is connected to the electrode lead, such that the battery monitoring unit can obtain parameters of each pouch battery cell through the sampling part and the conductive member, thereby improving the sampling precision and facilitating the accurate adjustment of the battery management strategy by the battery management system.

According to some embodiments of the present application, optionally, in the first direction, a reinforcing partition plate is sandwiched between at least two adjacent pouch battery cells, the reinforcing partition plate is connected to the packaging bag, and the hardness of the reinforcing partition plate is greater than that of the packaging bag.

In the above technical solution, by disposing a reinforcing partition plate between adjacent pouch battery cells and allowing the hardness of the reinforcing partition plate to be greater than that of the flexible shell, the plurality of pouch battery cells can be easily grouped, and the overall rigidity of the pouch battery cell assembly formed by the plurality of pouch battery cells in groups can be improved, thereby facilitating the installation of the pouch battery cell assembly formed by the plurality of pouch battery cells in groups and reducing the deformation of the pouch battery cells after being grouped.

According to some embodiments of the present application, optionally, the thickness of the reinforcing partition plate is less than the thickness of the pouch battery cell.

In the above technical solution, by allowing the thickness of the reinforcing partition plate to be less than the thickness of the pouch battery cell, the space occupied by the reinforcing partition plate can be reduced while improving the overall rigidity of the plurality of pouch battery cells in groups, and particularly, the space occupied by the reinforcing partition plate in the thickness direction of the pouch battery cell can be reduced, such that the overall energy density of the battery apparatus is relatively high.

According to some embodiments of the present application, optionally, the reinforcing partition plate is a metal plate.

In the above technical solution, by allowing the reinforcing partition plate to be provided as an aluminum plate, an aluminum alloy plate, a copper plate, a steel plate, or the like, the reinforcing partition plate can have relatively high strength and hardness, such that the overall rigidity of the plurality of pouch battery cells in groups can be better improved, and the deformation of the pouch battery cells in groups can be better reduced.

According to some embodiments of the present application, optionally, the reinforcing partition plate is a heat-conducting member and is in heat conducting connection with the packaging bag.

In the above technical solution, by allowing the reinforcing partition plate to be provided as a heat-conducting member and be in heat conducting connection with the packaging bag, the reinforcing partition plate can play the thermal management function while improving the overall rigidity of the pouch battery cells after being grouped. Through the heat exchange between the reinforcing partition plate and the pouch battery cell, the temperature of the pouch battery cell can be adjusted, such that the pouch battery cell works in suitable temperature range.

According to some embodiments of the present application, optionally, the reinforcing partition plate is a solid structure.

In the above technical solution, by allowing the reinforcing partition plate to be provided as a solid structure, the reinforcing partition plate can have relatively good structural strength and rigidity and play an effectual reinforcing effect in the case that the thickness of the reinforcing partition plate is relatively small, which is beneficial to allowing the pouch battery cell assembly to have relatively high volumetric energy density as a whole while allowing the pouch battery cell assembly to have relatively good intensity and rigidity as a whole.

According to some embodiments of the present application, optionally, the reinforcing partition plate has a cavity formed therein.

In the above technical solution, by providing the cavity in the reinforcing partition plate, the cavity in the reinforcing partition plate can play the effect of absorbing the expansion deformation of the pouch battery cell while the reinforcing partition plate enhances the overall rigidity of the pouch battery cells after being grouped; the cavity in the reinforcing partition plate can provide the buffering for the deformation of neighboring pouch battery cells and is beneficial to reducing the weight of the reinforcing partition plate.

According to some embodiments of the present application, optionally, the cavity includes a heat exchange flow channel for the flow of a heat exchange medium.

In the above technical solution, at least a part of the cavity in the reinforcing partition plate forms the heat exchange flow channel, and the heat exchange medium can exchange heat with the pouch battery cell by flowing through the heat exchange flow channel in the reinforcing partition plate, such that the temperature of the pouch battery cell can be effectively adjusted.

According to some embodiments of the present application, optionally, the reinforcing partition plate includes a connecting part protruding with respect to the packaging bag along the second direction, and the connecting part is located at a side of the electrode lead facing away from the electrical member.

In the above technical solution, by allowing the end parts of the reinforcing partition plates along the second direction to protrude with respect to the packaging bags of the pouch battery cells and to be connected to the case, because the reinforcing partition plates are sandwiched between a plurality of pouch battery cells and form the pouch battery cell assembly with a plurality of pouch battery cells in groups, and the hardness of the reinforcing partition plate on the whole is greater than that of the packaging bag of the pouch battery cell, the pouch battery cell assembly as a whole can have relatively good strength and rigidity.

According to some embodiments of the present application, optionally, in the first direction, two adjacent reinforcing partition plates are connected by a connecting plate, and the pouch battery cell is accommodated in a space formed by the enclosure of the connecting plate and two reinforcing partition plates.

In the above technical solution, two adjacent reinforcing partition plates are connected through the connecting plate, and the pouch battery cell is accommodated in the space formed by the enclosure of the connecting plate and the two reinforcing partition plates, such that the strength of the reinforcing partition plate is improved, and the installation reliability and stability of the pouch battery cell is further increased.

According to some embodiments of the present application, optionally, two adjacent reinforcing partition plates in the first direction and the connecting plate connected thereto are integrally formed.

In the above technical solution, by allowing two adjacent reinforcing partition plates in the first direction and the connecting plate connected between the two reinforcing partition plates to be integrally formed, the strength of the reinforcing partition plates is further improved, and the installation reliability and the structural stability of the pouch battery cell are improved.

According to some embodiments of the present application, optionally, the electrode leads of two adjacent pouch battery cells are directly connected.

In the above technical solution, by allowing the electrode leads of two adjacent pouch battery cells in the pouch battery cell assembly to be directly connected, the electrical connection device between the pouch battery cells can be omitted or reduced in number, and thus the number of components and parts of the pouch battery cell assembly can be reduced, such that the space occupied by the electrical connection device can be saved, and the improvement in the energy density of the pouch battery cell assembly is facilitated; besides, since the electrical connection device between the pouch battery cells is omitted or reduced in number, the cost can also be reduced.

According to some embodiments of the present application, optionally, the electrode leads of two adjacent pouch battery cells are connected by welding.

In the above technical solution, by connecting the electrode leads of two adjacent pouch battery cells in the pouch battery cell assembly by welding, the direct connection between terminals of two adjacent pouch battery cells in the pouch battery cell assembly is realized, such that the connection mode of the electrode leads of two adjacent pouch battery cells in the pouch battery cell assembly is simple and reliable.

According to some embodiments of the present application, optionally, the electrode leads of two adjacent pouch battery cells are directly connected by a conductive adhesive.

In the above technical solution, by connecting the electrode leads of two adjacent pouch battery cells in the pouch battery cell assembly by a conductive adhesive, the direct connection between terminals of two adjacent pouch battery cells in the pouch battery cell assembly is realized, such that the connection mode of the electrode leads of two adjacent pouch battery cells in the pouch battery cell assembly is simple and reliable.

According to some embodiments of the present application, optionally, a plurality of pouch battery cells are sequentially bonded and matched along the first direction, the pouch battery cell has a first face and a second face, and the second face is adjacent to the first face.

The battery apparatus includes a glue layer and a blocking member. The glue layer is disposed on one side of the pouch battery cell assembly where the first faces are located and is used for bonding a plurality of pouch battery cells to the case, and the blocking member is located at least between at least one of the pouch battery cells at each of the two ends of the pouch battery cell assembly in the first direction and the glue layer and is used for preventing the overflow of the glue layer from the first face of the pouch battery cell to the second face of the corresponding pouch battery cell.

In the above technical solution, by disposing the blocking member at least between at least one of the pouch battery cells at each of the two ends of the pouch battery cell assembly in the first direction and the glue layer, the risk of glue overflow from the first face of the pouch battery cell to the second face during the process of applying glue at the assembly phase of the battery apparatus can be reduced, the probability of the formation of a hardened structure on the second face of the pouch battery cell caused by glue overflow is reduced, and thereby the problem of local stress concentration on the surface of the pouch battery cell can be alleviated, the risk of the damage to the pouch battery cell can be reduced, and meanwhile the insulation between the first face of the pouch battery cell and the case can be enhanced, which is thereby beneficial to improving the reliability of the pouch battery cell and the reliability of the battery apparatus.

According to some embodiments of the present application, optionally, the blocking member covers at least the corner of the corresponding pouch battery cell.

In the above technical solution, by allowing the blocking member to cover the corner of the corresponding pouch battery cell, the probability of glue accumulation at the corners of the outermost pouch battery cells can be effectively reduced, thereby preventing the glue overflow. Meanwhile, this can also reduce the dimension of the blocking member and the material consumption and also can ensure that a proper space is reserved on the first face for glue application, thus enhancing the bonding strength between the pouch battery cell and the case.

According to some embodiments of the present application, optionally, the blocking member covers at least the edge regions of the corresponding pouch battery cell in the first direction.

In the above technical solution, by using the above technical solution, the blocking member can reduce the risk of glue overflow to the second face with a larger area of the pouch battery cell, such that the risk of the formation of a hardened structure at the edges of the pouch battery cell assembly caused by glue overflow can be further reduced, and thereby the risk of damage to the pouch battery cell is further reduced and the reliability of the battery apparatus is improved.

According to some embodiments of the present application, optionally, a blocking member is provided between two adjacent pouch battery cells along the first direction.

In the above technical solution, by disposing a blocking member between two adjacent pouch battery cells, the blocking member can block the glue that may overflow when the two first faces of the two adjacent soft pack cells are coated with glue, thus reducing the number of blocking members, simplifying components and parts, and saving the space.

According to some embodiments of the present application, optionally, the pouch battery cell is any one of a lithium iron phosphate cell, a ternary cell, and a solid-state cell.

In the above technical solution, when the aforementioned types of batteries are used as the pouch battery cell, more options may be provided for the design of the battery apparatus so as to meet different use requirements. When the pouch battery cell is a lithium iron phosphate cell, it offers advantages of high reliability, long cycle life, light weight, high capacity, and low internal resistance. When the pouch battery cell is a ternary cell, it offers advantages of high energy density and excellent electrochemical performance. When the pouch battery cell is a solid-state cell, it offers advantages of high energy density, high reliability, light weight, and good performance at both high and low temperatures.

According to some embodiments of the present application, optionally, the pouch battery cell is a lithium iron phosphate cell, and in the positive electrode material of the pouch battery cell, the amount ratio of the positive electrode active material, the binder, and the conductive agent is 96:(1-3):(1-3); the pouch battery cell is a ternary cell, and in the positive electrode material of the pouch battery cell, the amount ratio of the positive electrode active material, the binder, and the conductive agent is 96:(2-3):(1-2).

In the above technical solution, when the pouch battery cell is a lithium iron phosphate cell, the high proportion of the positive electrode active material means that a greater amount of electrochemically reactive materials may be accommodated within the limited electrode assembly, which is beneficial to increasing the capacity and energy density of the battery apparatus, such that the lithium iron phosphate cell can output a higher amount of electricity while maintaining relatively small volume and weight, making it suitable for application scenarios requiring a certain level of energy density. In addition, when the amounts of the binder and the conductive agent are within the aforementioned ranges, the cost of auxiliary materials can be reduced, thus reducing the overall cost of the battery apparatus. When the pouch battery cell is a ternary cell, due to the relatively complex structure and surface properties of the ternary material, using the aforementioned ratio of the positive electrode active material, the binder, and the conductive agent ensures the firm bonding between the positive electrode active material particles and between the active material and the current collector, such that the mechanical stability and structural integrity of the electrode assembly are improved, and the risk of the active material detachment and electrode pulverization during the charging and discharging processes are reduced, thereby extending the cycle life of the battery apparatus.

In a second aspect, an embodiment of the present application provides an electric apparatus. The electric apparatus includes the battery apparatus of any one of the above embodiments, and the battery apparatus is used for providing electric energy.

In the electric apparatus of the technical solution of the present application, the electrode leads are respectively located at the end parts of the pouch battery cell, a plurality of electrode leads are sequentially arranged along the first direction and form an accommodating gap with the end part of the pouch battery cell in the third direction, and the electrode lead electrical member is connected to the electrode lead and disposed in the accommodating gap, such that the structure of the battery apparatus is more compact, the space is saved, and the energy density of the battery apparatus is improved.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and are not to be construed as limiting the scope of the present application. Furthermore, the same reference numerals in all the drawings denote identical components. In the drawings:
FIG. 1 is a schematic structural view of a vehicle according to some embodiments of the present application;
FIG. 2 is a schematic view of part of the structure of a battery apparatus according to some embodiments of the present application;
FIG. 3 is an enlarged schematic view of portion A in FIG. 2;
FIG. 4 is a schematic view of the three-dimensional structure of a pouch battery cell according to some embodiments of the present application;
FIG. 5 is a schematic structural view of a pouch battery cell according to some embodiments of the present application viewed along a first direction;
FIG. 6 is a schematic cross-sectional view of a pouch battery cell according to some embodiments of the present application;
FIG. 7 is a schematic view of a combination of a pouch battery cell and an electrical member according to some embodiments of the present application;
FIG. 8 is a schematic view of the three-dimensional structure of a battery apparatus according to some embodiments of the present application;
FIG. 9 is a schematic structural view of a battery apparatus with a top cover removed according to some embodiments of the present application;
FIG. 10 is a schematic structural view of a battery apparatus with a top cover removed according to some other embodiments of the present application;
FIG. 11 is an enlarged schematic view of portion B in FIG. 10;
FIG. 12 is a schematic view of a current path formed by connecting pouch battery cells in series according to some embodiments of the present application;
FIG. 13 is a schematic view of a current path formed by connecting pouch battery cells in series according to some other embodiments of the present application;
FIG. 14 is a schematic view of the adapting of an electrical member according to some embodiments of the present application;
FIG. 15 is a schematic structural view of a pouch battery cell assembly according to some embodiments of the present application;
FIG. 16 is an enlarged schematic view of portion C in FIG. 15;
FIG. 17 is a schematic cross-sectional view of a reinforcing partition plate according to some embodiments of the present application;
FIG. 18 is a schematic view of a combination of a reinforcing partition plate and a single pouch battery cell according to some embodiments of the present application;
FIG. 19 is a schematic view of a pouch battery cell assembly according to some embodiments of the present application;
FIG. 20 is a front view of the pouch battery cell assembly of FIG. 19;
FIG. 21 is an enlarged view of portion D in FIG. 20;
FIG. 22 is an exploded view of the structure of a battery apparatus provided according to some embodiments of the present application;
FIG. 23 is a schematic view of part of the structure of a battery apparatus provided according to some embodiments of the present application;
FIG. 24 is a bottom view I of part of the structure of a battery apparatus provided according to some embodiments of the present application; and
FIG. 25 is a bottom view II of part of the structure of a battery apparatus provided according to an embodiment of the present application.

Reference numerals in the detailed description are as follows:
1000-vehicle; 100-battery apparatus; 200-controller; 300-motor;
10-case; 10a-accommodating space; 101-case body; 102-heat exchange plate; 11-top cover; 12-bottom plate; 111-case wall; 17-support; 171-sub-support; 20-pouch battery cell assembly; 201-accommodating gap; 30-pouch battery cell; 31-packaging bag; 310-corner space; 311-first face; 312-second face; 33-electrode lead; 331-lead-out part; 34-glue layer; 35-blocking member; 351-first portion; 352-second portion; 40-reinforcing partition plate; 41-connecting part; 42-cavity; 43-heat exchange flow channel; 44-connecting plate; 60-electrical member; 61-battery monitoring unit; 611-second connector; 62-electrical connecting member; 70-conductive member; 71-first end part; 72-second end part; 81-sampling part; 91-first patch cord; 92-second patch cord; 921-first connector.

### DETAILED DESCRIPTION

Embodiments of the technical solutions of the present application will be described in detail below with reference to the drawings. The following embodiments are only for illustrating the technical solutions of the present application more clearly, and therefore are only exemplary and do not limit the claimed scope of the present application.

Unless otherwise defined, all technical and scientific terms used herein have the same meaning as commonly understood by those skilled in the technical field to which the present application belongs. The terms used herein are only for illustrating the specific embodiments, rather than limiting the present application. The terms "include", "comprise" and "provided with", and any variations thereof in the specification and claims of the present application and the above-mentioned description of drawings encompass non-exclusive inclusions.

In the description of the embodiments of the present application, technical terms such as "first", "second", and the like are only used to distinguish different objects and should not be interpreted as indicating or implying the relative importance or implicitly indicating the number, specific order, or priority of the indicated technical features. In the description of the embodiments of the present application, unless otherwise specifically defined, "plurality of" means two or more than two.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "a plurality of" refers to more than two (including two). Similarly, "multiple groups" refers to more than two groups (including two groups), and "multiple pieces" refers to more than two pieces (including two pieces).

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like indicating directional or positional relationships are based on the directional or positional relationships shown in the drawings. They are merely for the convenience of describing the embodiments of the present application and simplifying the description, and are not intended to indicate or imply that the apparatuses or elements referred to must have specific directions or be constructed and operated in specific directions. Therefore, these terms should not be construed as limitations on the embodiments of the present application.

In the description of the embodiments of the present application, unless otherwise clearly specified and defined, the technical terms "mount", "interconnect", "connect", "fix", and the like should be interpreted in their broad senses. For example, "connect" may be "fixedly connect", "detachably connect", or "integrally connect"; "mechanically connect" or "electrically connect"; or "directly interconnect", "indirectly interconnect through an intermediate", "communication between interiors of two elements", or "interaction between two elements". For those of ordinary skill in the art, the specific meanings of the above terms in the embodiments disclosed in the present application can be interpreted according to the specific condition.

At present, judging from the development of the market situation, the application of power batteries is becoming broader. Power batteries are not only applied in energy storage power systems such as hydropower, thermal power, wind power and solar power stations, but are also widely applied in electric transportation vehicles such as electric bicycles, electric motorcycles, or electric cars, as well as in military equipment, aerospace, and other fields. As the application of the power batteries becomes broader, the market demand thereof is also increasing.

With the expansion of the market and the development of technology, the performance and safety requirements of users on power batteries are also becoming more strict. Power batteries often require frequent charging and discharging in the working process, and the charging and discharging process easily results in such problems as too large current or too high temperature, thus affecting the use safety. It has become an important way for guaranteeing the use safety of batteries that the voltage or current parameters of the battery are collected and transmitted to the battery management system (BMS) to provide reference for the control strategy of the BMS and thereby effective and timely protection is performed.

In the related art, a battery apparatus generally includes a plurality of pouch battery cells, and the plurality of pouch battery cells arranged in a case. To collect the voltage or current of the pouch battery cells for reference by a battery management system, the end part of each pouch battery cell is electrically connected to a battery monitoring unit. For guaranteeing whole grouping efficiency, the plurality of pouch battery cells can all be directly bonded in the case through a glue layer. However, the plurality of pouch battery cells are electrically connected to the battery monitoring unit in a many-to-one manner, and this leads to the occupation of a large space inside the case by the connecting components such as the conductor wire and connector and the battery monitoring unit and thereby restricts the promotion in the energy density of the battery apparatus.

In view of the above situation, the present application provides a battery apparatus. The battery apparatus includes a pouch battery cell assembly and an electrical member, where the pouch battery cell assembly includes a plurality of pouch battery cells arranged in a first direction, electrode leads of each pouch battery cell are respectively disposed at end parts of a packaging bag along a second direction, the electrode leads of the plurality of pouch battery cells located on the same side are sequentially arranged along the first direction, and an accommodating gap is formed between the electrode leads and the end part of the pouch battery cell assembly in a third direction, and the electrical member is disposed in the accommodating gap and is electrically connected to the electrode leads. Every two of the first direction, the second direction, and the third direction are arranged at an included angle to each other. Because of such a design, the electrical member not only can be connected to each pouch battery cell, but also can utilize the accommodating gap between the electrode leads and the end part of the pouch battery cell assembly, such that the structure is more compact, and thereby the installation space is saved, which is beneficial to improving the energy density of the battery apparatus.

In the embodiments of the present application, the pouch battery cell may be a secondary battery, and the secondary battery refers to a battery that can be reused by activating the active material through charging after the battery cell is discharged.

The battery apparatus described in the embodiments of the present application may include a plurality of pouch battery cell assemblies for supplying voltage and capacity. The battery cell assembly may include a plurality of pouch battery cells connected in series, in parallel, or in series-parallel through a busbar component.

In some embodiments, the pouch battery cell assembly is generally formed by arranging a plurality of pouch battery cells.

As an example, the pouch battery cell assembly may be a battery module, and the battery module is formed by arranging and fixing a plurality of pouch battery cells to form an independent module. As an example, the battery module can be formed by allowing a plurality of pouch battery cells to be in snap fit with a mounting plate having slots.

In some embodiments, the battery apparatus may be a battery pack. The battery pack includes a case and one or more pouch battery cell assemblies, and the pouch battery cell assemblies are accommodated in the case.

As an example, the pouch battery cell assembly may be a battery module, and the pouch battery cell assembly may be accommodated in the case in a mode of fixing the battery module in the case.

As an example, the pouch battery cell assembly may also be accommodated in the case by directly fixing a plurality of pouch battery cells to the case.

The pouch battery cell may be a lithium ion battery, a sodium ion battery, a sodium lithium ion battery, a lithium metal battery, a sodium metal battery, a lithium sulfur battery, a magnesium ion battery, a nickel-hydrogen battery, a nickel-cadmium battery, a lead storage battery, and the like. This is not limited in the embodiments of the present application.

The technical solutions described in the embodiments of the present application are applicable to various electric apparatuses that use pouch battery cells, such as a mobile phone, a portable device, a laptop, a battery car, an electric toy, an electric tool, a vehicle, a ship, and a spacecraft. For example, the spacecraft includes an airplane, a rocket, a space shuttle, and a spaceship.

For the convenience of description, an embodiment of the present application in which a vehicle 1000 is taken as the example of the electric apparatus is used for description.

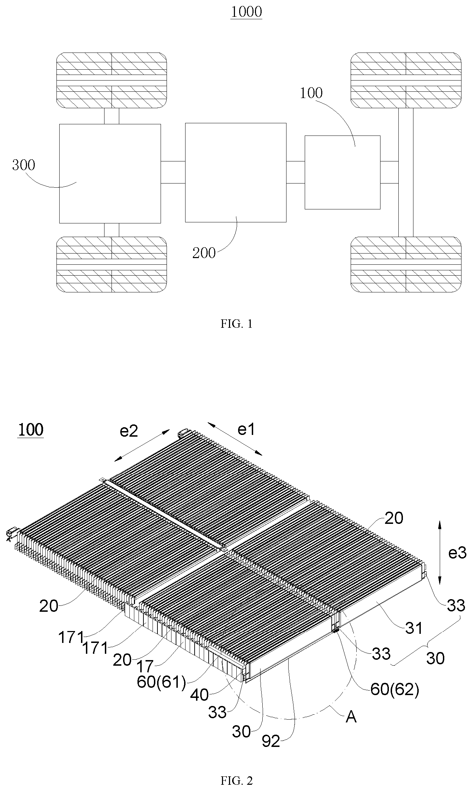

Referring to FIG. 1, FIG. 1 is a schematic structural view of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery apparatus 100 is provided inside the vehicle 1000, and the battery apparatus 100 may be disposed at the bottom, the head, or the tail of the vehicle 1000. The battery apparatus 100 may be used for powering the vehicle 1000. For example, the battery apparatus 100 may serve as an operation power source of the vehicle 1000. The vehicle 1000 may further include a controller 200 and a motor 300. The controller 200 is used for controlling the battery apparatus 100 to power the motor 300, e.g., for operation power needed by the vehicle 1000 for start-up, navigation, and driving.

In some embodiments of the present application, the battery apparatus 100 may not only serve as an operation power source for the vehicle 1000, but also as a driving power source for the vehicle 1000 to, instead of or in part instead of fuel or natural gas, provide driving power for the vehicle 1000.

Referring to FIG. 2 to FIG. 3, the battery apparatus 100 includes a case 10, pouch battery cell assemblies 20, and an electrical member 60, where the pouch battery cell assembly 20 includes a plurality of pouch battery cells 30 arranged along a first direction, each pouch battery cell 30 is bonded to the case 10 and includes a packaging bag 31 and electrode leads 33, and the electrode leads 33 are respectively disposed at the end parts of the packaging bag 31 along a second direction; all the electrode leads 33 of the plurality of pouch battery cells 30 of the pouch battery cell assembly 20 located at the same side are sequentially arranged along the first direction, and along a third direction, an accommodating gap 201 is formed between a plurality of electrode leads 33 and the end part of the pouch battery cell assembly 20; the electrical member 60 is disposed in the accommodating gap 201 and electrically connected to the electrode leads 33; every two of the first direction, the second direction, and the third direction are arranged at an included angle to each other.

The first direction may refer to the e1 direction in the drawings, the second direction may refer to the e2 direction in the drawings, and the third direction may refer to the e3 direction in the drawings. In some embodiments of the present application, every two of the first direction, the second direction, and the third direction may be arranged perpendicular to each other.

The case 10 is provided with an accommodating space 10a, and the pouch battery cell assembly 20 is disposed in the accommodating space 10a. The accommodating space 10a may refer to a space defined inside the case 10 for accommodating the pouch battery cell assembly 20 and other devices. The shape of the case 10 may be, but is not limited to, a rectangular parallelepiped, a cube, a cylinder, or the like. The material of the case 10 may be, but is not limited to, a metal material or a non-metal material. The metal material may include, but is not limited to, aluminum alloy, stainless steel, and the like, and the non-metal material may include, but is not limited to, plastic, carbon fiber composite material, and the like.

The pouch battery cell 30 refers to a cell with a shell made of a soft material. The pouch battery cell 30 includes an electrode assembly (not shown) that can generate electric energy, and the electrode assembly can be accommodated in the packaging bag 31. The electrode lead 33 is electrically connected to the electrode assembly and is at least partially exposed outside the packaging bag 31. The packaging bag 31 is of a flexible structure. For example, the packaging bag 31 may be made of an aluminum-plastic film.

The electrode assembly consists of a positive electrode plate, a negative electrode plate, and a separation film. A pouch battery cell primarily works by the movement of metal ions between the positive electrode plate and the negative electrode plate.

The positive electrode plate includes a positive electrode current collector and a positive electrode active substance layer. The surface of the positive electrode current collector is coated with the positive electrode active substance layer. The positive electrode current collector not coated with the positive electrode active substance layer protrudes from the positive electrode current collector coated with the positive electrode active substance layer. The positive electrode current collector not coated with the positive electrode active substance layer serves as a positive electrode tab. Taking lithium-ion batteries as an example, the material of the positive electrode current collector may be aluminum, and the positive electrode active substance may be lithium cobaltate, lithium iron phosphate, ternary lithium, lithium manganate, or the like.

The negative electrode plate includes a negative electrode current collector and a negative electrode active substance layer. The surface of the negative electrode current collector is coated with the negative electrode active substance layer. The negative electrode current collector not coated with the negative electrode active substance layer protrudes from the negative electrode current collector coated with the negative electrode active substance layer. The negative electrode current collector not coated with the negative electrode active substance layer serves as a negative electrode tab. The material of the negative electrode current collector may be copper, and the negative electrode active substance may be carbon, silicon, or the like. To ensure the passing of a large current without fusing, a plurality of positive electrode tabs are provided and stacked together, and a plurality of negative electrode tabs are provided and stacked together.

The material of the separation film may be polypropylene (PP), polyethylene (PE), or the like.

The electrode assembly of the pouch battery cell 30 may be a winding-type electrode assembly or a stacking-type electrode assembly. The electrode assembly includes electrode plates (not shown) and tabs (not shown), and the electrode assembly may be formed by winding of the electrode plates or may also be formed by stacking of the electrode plates. The electrode lead 33 of the pouch battery cell 30 is connected to a tab, and at least a part of the electrode lead 33 is located outside the packaging bag 31 to serve as a lead-out structure of the electrode assembly. The electrode lead 33 may be used for electrically connecting the pouch battery cell 30 to other pouch battery cells 30 or other components.

Optionally, the part of the electrode lead 33 exposed outside the packaging bag 31 is a lead-out part, and the lead-out part is formed in a sheet shape.

It is difficult for the pouch battery cell 30 to maintain a stable solid outer contour since the outermost packaging bag 31 is of a flexible structure. The outer contour of the packaging bag 31 may be approximately a flat rectangular parallelepiped, and in the length direction, width direction, and thickness direction of the pouch battery cell, the dimension of the pouch battery cell in the length direction of the pouch battery cell is the largest, and the dimension of the pouch battery cell in the thickness direction of the pouch battery cell is the smallest. For example, the thickness direction of the pouch battery cell may refer to the e1 direction in the drawings, the length direction of the pouch battery cell may refer to the e2 direction in the drawings, and the width direction of the pouch battery cell may refer to the e3 direction in the drawings.

The pouch battery cells 30 may be disposed in a posture where the thickness direction, the length direction, and the width direction of the packaging bag 31 are correspondingly parallel to the first direction, the second direction, and the third direction, respectively, and a plurality of pouch battery cells 30 are sequentially arranged along the thickness direction thereof. That is, the dimension of the outer contour of the packaging bag 31 in the second direction (the length of the packaging bag 31) may be significantly larger than the dimension in the first direction and the third direction (the width and the thickness), and the dimension of the outer contour of the packaging bag 31 in the third direction (the width) is also larger than the dimension in the first direction (the thickness).

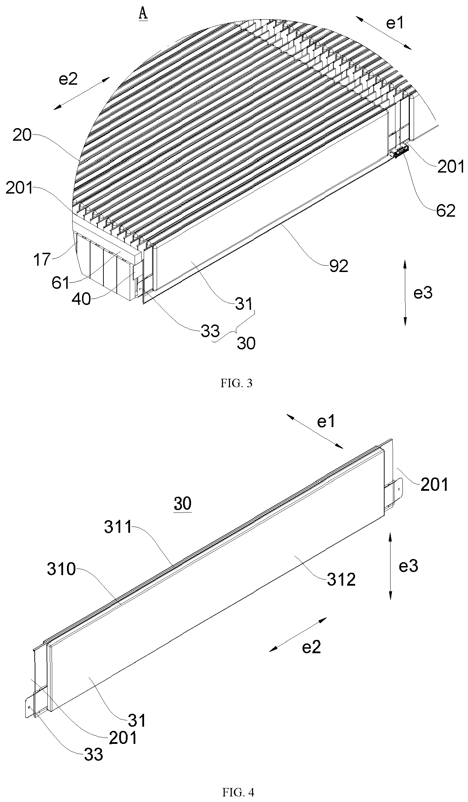

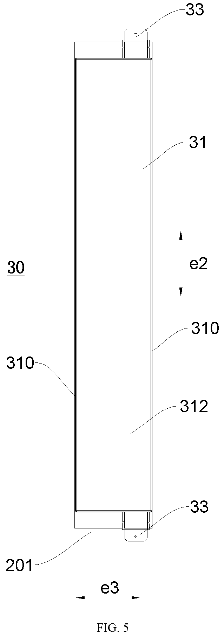

Referring to FIG. 3 to FIG. 5, the electrode lead 33 may be disposed at both end parts of the pouch battery cell 30 along the second direction. The electrode lead 33 may at least partially protrude from the end part of the packaging bag 31 along the second direction. In the third direction, the space between the parts of the plurality of electrode leads 33 protruding from the packaging bags 31 and one end part of the pouch battery cell assembly 20 along the third direction forms an accommodating gap 201. In the third direction, the distance between the electrode lead 33 and the end part of the pouch battery cell assembly 20, i.e., the width of the accommodating gap 201, is greater than or equal to the dimension of the electrical member 60 in the third direction.

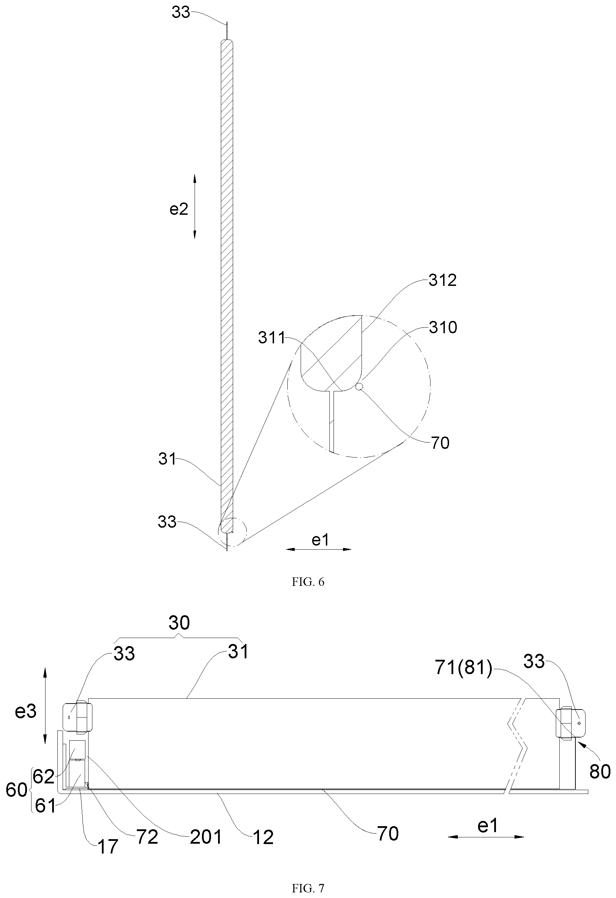

Optionally, referring to FIG. 7, the distance by which the electrode lead 33 protrudes from the end part of the packaging bag 31 along the second direction is greater than or equal to the dimension of the electrical member 60 in the second direction.

It is easy to understand that the electrode lead 33 protrudes at least partially from the end part of the packaging bag 31, such that the space occupied by the pouch battery cell 30 in the battery apparatus 100 is further expanded outward on the basis of the volume of the packaging bag 31, and the accommodating gap 201 formed by the electrode lead 33 and the end part of the pouch battery cell 30 in the third direction is contained in the space occupied by the pouch battery cell 30. Compared with the technology where the electrical member 60 is disposed outside the space occupied by the pouch battery cell 30, the electrical member 60 provided in the embodiments of the present application is disposed in the accommodating gap 201, that is, the electrical member 60 is installed in the space occupied by the pouch battery cell 30, such that the structure is more compact, the space utilization rate is improved, and thereby the capacity density of the battery apparatus 100 is improved.

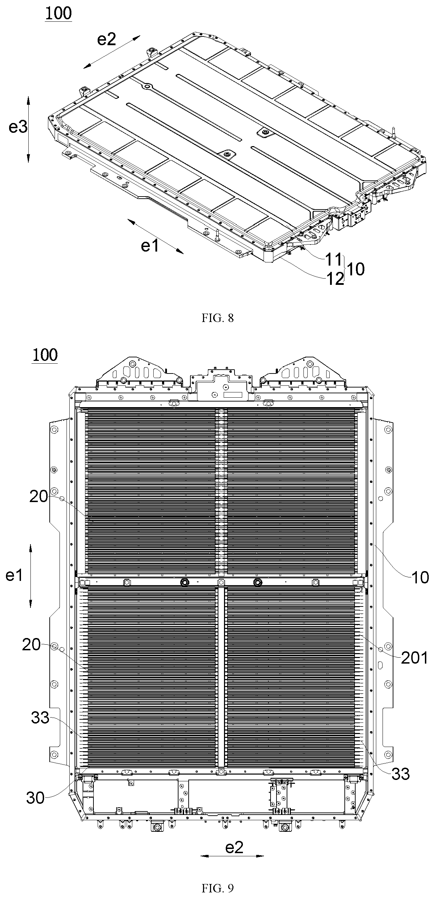

Optionally, referring to FIG. 9, in the same pouch battery cell assembly 20, all the electrode leads 33 located on the same side may be sequentially arranged along the first direction and are flush in the third direction. That is, in the third direction, the parts of the plurality of electrode leads 33 protruding from the packaging bags 31 are spaced apart from the end part of the pouch battery cell assembly 20 along the third direction by the same distance.

The electrical member 60 may be directly connected to the electrode lead 33, or may be indirectly connected to the electrode lead 33 through a conductive member 70 such as a wire or a connector. Each pouch battery cell 30 in the battery apparatus 100 may be electrically connected to an electrical member 60.

In the battery apparatus 100 according to the embodiments of the present application, the plurality of pouch battery cells 30 of the pouch battery cell assembly 20 are arranged along the first direction, the end parts of the pouch battery cell 30 along the second direction are respectively provided with the electrode leads 33, all the electrode leads 33 of the plurality of pouch battery cells 30 located on the same side are sequentially arranged along the first direction, all the electrode leads 33 on that side and the end part of the pouch battery cell assembly 20 form the accommodating gap 201 in the third direction, and the electrical member 60 is disposed in the accommodating gap 201 and connected to the electrode leads 33, such that the electrical member 60 can use the accommodating gap 201 as the installation space, thereby making the structure of the battery apparatus 100 more compact, saving space, and thus further contributing to improving the energy density of the battery apparatus 100.

Referring to FIG. 3 and FIG. 7, according to some embodiments of the present application, optionally, the electrical member 60 includes a battery monitoring unit 61 and/or an electrical connecting member 62.

Specifically, the battery monitoring unit 61 is used for acquiring the voltage, current, temperature, and other parameters of a single pouch battery cell 30 or a plurality of pouch battery cells. Accordingly, the battery monitoring unit 61 may include a voltage sensor, a current sensor, a temperature sensor, and/or other detection units. The battery monitoring unit 61 further includes a slave controller 200 (CSC, cell supervision circuit) and is used for transmitting parameters of the pouch battery cell 30 to a main control panel (BMU, battery management unit).

Illustratively, the electrical member 60 includes a battery monitoring unit 61, and the battery monitoring unit 61 is electrically connected to the pouch battery cell assembly 20.

Referring to FIG. 3, in a specific embodiment, the electrical member 60 includes a battery monitoring unit 61 and an electrical connecting member 62, and the battery monitoring unit 61 is disposed in a split manner in the accommodating gaps 201 formed by the electrode leads 33 on two sides of the pouch battery cells 30 in the second direction. In this embodiment, the battery apparatus 100 includes a second patch cord 92. One end of the second patch cord 92 is connected to the battery monitoring unit 61, and the other end is connected to the electrical connecting member 62, thus realizing the electrical connection between the battery monitoring unit 61 and the electrical connecting member 62.

In this embodiment, optionally, the battery monitoring unit 61 and the electrical connecting member 62 are respectively located in the accommodating gaps 201 formed by the upper and lower sides of the electrode leads 33 along the third direction.

Referring to FIG. 7, the electrical member 60 includes a battery monitoring unit 61 and an electrical connecting member 62. The battery monitoring unit 61 and the electrical connecting member 62 are connected together and collectively housed in the accommodating gap 201. The pouch battery cells 30 are electrically connected to the electrical connecting member 62 and are electrically connected to the battery monitoring unit 61 via the electrical connecting member 62, such that the battery monitoring unit 61 can receive parameters of the pouch battery cells 30.

In this embodiment, optionally, the electrical connecting member 62 is connected to the battery control unit by plugging in, thereby improving the connection reliability and saving the installation space.

In the above technical solution, the electrical member 60 includes the battery monitoring unit 61 and/or the electrical connecting member 62, the electrical member 60 may be electrically connected to the electrode leads 33 through one of the battery monitoring unit 61 and the electrical connecting member 62, and the battery monitoring unit 61 and/or the electrical connecting member 62 may be electrically connected to the pouch battery cells 30 through the electrode leads 33, such that the battery management system can monitor and adjust the pouch battery cell assembly 20 through the electrical member 60. In addition, the electrical member 60 may further acquire parameters of the pouch battery cells 30 for the battery management system to refer to for the management strategy.

Referring to FIG. 7, according to some embodiments of the present application, optionally, the electrical member 60 includes a battery monitoring unit 61 and an electrical connecting member 62, the electrical connecting member 62 is located between the electrode leads 33 and the battery monitoring unit 61, and the electrical connecting member 62 electrically connects the battery monitoring unit 61 and the electrode leads 33.

Specifically, the electrical connecting member 62 is accommodated in the accommodating gap 201 together with the battery monitoring unit 61. A plurality of electrode leads 33 located on the same side, the electrical connecting member 62, and the battery monitoring unit 61 may be stacked along the third direction. The electrical connecting member 62 may be connected to the plurality of electrode leads 33 through the conductive members 70, or may be directly connected to part of the plurality of electrode leads 33. The electrical connecting member 62 may be connected to the battery monitoring unit 61 through an electrical connection terminal, a wire harness, or an electrical connection part forming a mortise and tenon structure.

In the above technical solution, the electrical connecting member 62 is located between the electrode leads 33 and the battery monitoring unit 61 and connects the electrode leads 33 and the battery monitoring unit 61, such that the electrode leads 33 of the plurality of pouch battery cells 30 can be connected to the battery monitoring unit 61 through the electrical connecting member 62, the space of the accommodating gap 201 in the third direction is further utilized, the structure is more compact, and the installation space required by the battery monitoring unit 61 is saved while the electrical connection between the battery monitoring unit 61 and the plurality of pouch battery cells 30 is realized.

According to some embodiments of the present application, optionally, the battery apparatus 100 includes a main control panel (not shown), the electrical member 60 includes a battery monitoring unit 61, and the battery monitoring unit 61 is electrically connected to the main control panel.

Specifically, structures and electronic components that implement various control functions in the battery management system may be integrated in the main control panel. The battery monitoring unit 61 is electrically connected to the electrode leads 33 to collect the current, voltage, temperature, and other parameters of the pouch battery cells 30. The battery monitoring unit 61 may include the slave controller 200, and the battery monitoring unit 61 may be connected to the main control panel through a communication wire harness to transmit the parameters of the pouch battery cells 30 to the main control panel.

In the above technical solution, the battery apparatus 100 includes the main control panel, the electrical member 60 includes the battery monitoring unit 61, the battery monitoring unit 61 is electrically connected to the main control panel, and the battery monitoring unit 61 can collect the parameters of the pouch battery cells 30, such that the main control panel can accurately and reliably acquire the parameters of the pouch battery cells 30 and timely adjust the control strategy for the battery apparatus 100 based on the state battery cell of the pouch battery cells 30.

Referring to FIG. 7 to FIG. 10, according to some embodiments of the present application, optionally, the case 10 includes a bottom plate 12, and the accommodating gap 201 is located between the bottom plate 12 and the electrode leads 33.

As an example, the case 10 may include a first case and a second case. The first case and the second case are snap-fitted, such that an enclosed accommodating space 10a is formed inside the case 10 to receive the pouch battery cell assembly 20. The term "enclosed" here refers to covering or closing, either sealed or not sealed. The first case may be a top cover 11 or a bottom plate 12.

As an example, the case 10 may include a top cover 11, a frame, and a bottom plate 12. The top cover 11 and the bottom plate 12 are each connected to the frame, such that an enclosed space is formed inside the case 10 to receive the pouch battery cell assembly 20.

In some embodiments, the case 10 may be part of the chassis structure of the vehicle 1000. For example, a part of the case 10 may become at least a part of the floor of the vehicle 1000, or a part of the case 10 may become at least a part of a crossmember and a longitudinal member of the vehicle 1000.

Optionally, the top cover 11 and the bottom plate 12 are opposite to each other along the third direction, the pouch battery cell assembly 20 is located in the space between the top cover 11 and the bottom plate 12, one end part of the pouch battery cell assembly 20 in the third direction abuts against the top cover 11 or is disposed close to the top cover 11, and the other end of the pouch battery cell assembly 20 in the third direction abuts against the bottom plate 12. The electrode leads 33 and the end part of the pouch battery cell assembly 20 in the third direction that abuts against the bottom plate 12 form an accommodating gap 201. The electrode leads 33 protrude from the end parts of the packaging bags 31 along the second direction, and the electrode leads 33 and the bottom plate 12 are opposite to each other and spaced apart from each other in the third direction and together limit the boundary range of the accommodating gap 201. In this embodiment, the pouch battery cell assembly 20 may be fixedly connected to the bottom plate 12.

Further, in the third direction, the electrode leads 33 are disposed close to the top cover 11, that is, the distance between the electrode leads 33 and the end part of the pouch battery cell assembly 20 close to the top cover 11 is less than the distance between the electrode leads 33 and the end part of the pouch battery cell assembly 20 close to the bottom plate 12, thus increasing the spatial range of the accommodating gap 201.

In the above technical solution, the battery apparatus 100 receives the pouch battery cell assembly 20 through the case 10, the case 10 can support and protect the pouch battery cells 30, and the accommodating gap 201 is located between the bottom plate 12 of the case 10 and the electrode leads 33, such that the boundary range of the accommodating gap 201 in the third direction is clear, and the bottom plate 12 can support the electrical member 60 in the accommodating gap 201, and thereby the electrical member 60 is more stably installed in the accommodating gap 201.

Referring to FIG. 3 and FIG. 7, according to some embodiments of the present application, optionally, the battery apparatus 100 includes a support 17 connected to the case 10, and the electrical member 60 is installed on the support 17.

Specifically, the support 17 is located on at least one side of the pouch battery cell assembly 20 along the second direction, and it may be that the support 17 is located on one side of the pouch battery cell assembly 20 along the second direction or the support 17 is located on both sides of the pouch battery cell assembly 20 along the second direction. The electrical member 60 may be connected to the support 17 through at least one of welding, screwing, riveting, snap-fit connection, adhesive connection, fastener-based connection, and the like. The electrical member 60 and the support 17 may be fixedly connected in a detachable manner.

Optionally, the support 17 includes a plurality of sub-supports 171. The plurality of sub-supports 171 of the support 17 may be arranged along the first direction, and two adjacent sub-supports 171 may be connected. The plurality of sub-supports 171 may be formed independently. For example, two adjacent sub-supports 171 may be connected by welding, by a structural adhesive, or by a fastener; alternatively, the plurality of sub-supports 171 may be integrally formed.

Two adjacent sub-supports 171 may form a penetrating installation space along an extending direction (e.g., the first direction) of the electrical member 60 to accommodate the electrical member 60.

In the above technical solution, by allowing the support 17 to be connected to the case 10 and allowing the electrical member 60 to be installed on the support 17, the electrical member 60 can be connected to the case 10 through the support 17, thereby increasing the installation stability and reliability of the electrical member 60 and being beneficial to improving the overall rigidity and strength of the battery apparatus 100.

According to some embodiments of the present application, optionally, the electrical member 60 is bonded to the case wall 111 of the case 10.

Specifically, the case wall 111 of the case 10 defines, in an enclosing manner, the accommodating space 10a, and the case wall 111 may be a wall surface of the case 10 on any side in the first direction, the second direction, or the third direction. The electrical member 60 is disposed in the accommodating gap 201 with at least one side surface facing the case 10. The surface of the electrical member 60 facing the case 10 may be bonded to the inner wall surface of the case 10.

Illustratively, the electrode leads, the end parts of the packaging bags 31 along the second direction, and the bottom plate together form the accommodating gap 201. The electrical member 60 is accommodated in the accommodating gap 201, and the electrical member 60 is located between the electrode leads and the bottom plate in the third direction and between the side case wall of the case 10 and the packaging bags 31 in the second direction. The electrical member 60 may be directly connected to the bottom plate, and/or the electrical member 60 may be directly connected to the case wall 111 of the case 10 to which the electrical member is opposite in the second direction.

The electrical member 60 may be connected to the case wall 111 of the case 10 through a structural adhesive, glue, an adhesive film, or the like.

In the above technical solution, by allowing the electrical member 60 to be bonded to the case wall 111 of the case 10, the electrical member 60 is connected to the case wall 111 of the case 10 to form a whole, which is beneficial to the integration of the electrical member 60 and the case 10, saves the space, facilitates the assembling of internal components and parts of the battery apparatus 100, and helps to provide insulation and isolation protection between the electrical member 60 and the case 10.

Referring to FIG. 2, according to some embodiments of the present application, optionally, the electrical member 60 includes a battery monitoring unit 61, and the length of the battery monitoring unit 61 extends along the first direction.

Specifically, referring to FIG. 7, the accommodating gap 201 is formed in a space between the electrode leads 33 and the bottom plate 12 in the third direction, and the plurality of electrode leads 33 located on the same side are sequentially arranged along the first direction, such that the accommodating gap 201 formed by the electrode leads 33 located on the same side extends along the first direction. The battery monitoring unit 61 is disposed in the accommodating space 10a and extends along the extending direction of the accommodating gap 201, that is, along the first direction. The outer contour of the battery monitoring unit 61 may be a long plate or a long strip.

In the above technical solution, the length of the battery monitoring unit 61 extends along the first direction, and the accommodating gap 201 also extends along the first direction, such that the battery monitoring unit 61 can fully fill the space where the accommodating gap 201 is located, and the space utilization rate is improved.

Referring to FIG. 2 and FIG. 9, according to some embodiments of the present application, optionally, a plurality of pouch battery cell assemblies 20 are provided, the plurality of the pouch battery cell assemblies 20 are arranged along the second direction, and the electrical member 60 is disposed between two pouch battery cell assemblies 20 or disposed at one side of all the pouch battery cell assemblies 20.

Specifically, the plurality of pouch battery cell assemblies 20 may each be electrically connected to the electrical member 60. The number of pouch battery cells 30 may be two, three, or more than three. The plurality of pouch battery cell 30 in each pouch battery cell assembly 20 are arranged along the first direction, and the end parts of the pouch battery cells 30 located on the same side in the second direction can be flush along the second direction.

Illustratively, the number of pouch battery cell assemblies 20 is two, and the electrical member 60 may be disposed on one of the two sides of the pouch battery cell assemblies 20 facing away from each other along the second direction.

Illustratively, the number of pouch battery cell assemblies 20 is two, the electrode leads 33 on the sides of the two pouch battery cell assemblies 20 close to each other along the second direction form an accommodating gap 201 in the third direction, and the electrical member 60 is disposed in the accommodating gap 201 on the sides close to each other of the two pouch battery cell assemblies 20.

Illustratively, the number of pouch battery cell assemblies 20 is three, and the electrical member 60 may be disposed on the side of the pouch battery cell assembly 20 that is first or last along the second direction away from the other pouch battery cell assemblies 20.

Illustratively, the number of pouch battery cell assemblies 20 is three, and the electrical member 60 is disposed between two of the pouch battery cell assemblies 20.

In the above technical solution, a plurality of pouch battery cell assemblies 20 are provided, such that the overall output voltage of battery apparatus 100 can be increased; along the second direction, the electrical member 60 is disposed between two pouch battery cell assemblies 20 or on one side of all the pouch battery cell assemblies 20, such that the structure becomes compact and the space in the second direction is saved.

Referring to FIG. 3 and FIG. 7, according to some embodiments of the present application, optionally, the electrical member 60 includes a battery monitoring unit 61, and at least one electrode lead 33 of each pouch battery cell 30 is electrically connected to the battery monitoring unit 61 through a conductive member 70.

Specifically, two electrode leads 33 may be disposed on each pouch battery cell 30, one of the two electrode leads 33 is a positive electrode lead, and the other is a negative electrode lead. One of the two electrode leads 33 of the pouch battery cell 30 is disposed on one side of the pouch battery cell 30 along the second direction, and the other one of the two electrode leads 33 of the pouch battery cell 30 is disposed on the other side of the pouch battery cell 30 along the second direction. The dimension of the pouch battery cell 30 in the second direction may be significantly larger than the dimensions in the first direction and the second direction, that is, the length direction of the pouch battery cell is parallel to the second direction; the two electrode leads 33 of the pouch battery cell 30 are located on opposite sides of the pouch battery cell 30 in the length direction.

Illustratively, for the plurality of pouch battery cells 30, one of the two electrode leads 33 of each pouch battery cell 30 is connected to the conductive member 70 and is electrically connected to the battery monitoring unit 61 through the conductive member 70; the other one of the two electrode leads 33 of the pouch battery cell 30 is not electrically connected to the conductive member 70 and the battery monitoring unit 61.

Illustratively, for the plurality of pouch battery cells 30, both electrode leads 33 of each pouch battery cell 30 are connected to the conductive member 70 and are electrically connected to the battery monitoring unit 61 through the conductive member 70.

Illustratively, for the plurality of pouch battery cells 30, the electrode leads 33 at both ends of some of the pouch battery cells 30 are connected to the conductive member 70 and are electrically connected to the battery monitoring unit 61, and only one electrode lead 33 of each of the other pouch battery cells 30 is connected to the conductive member 70.

In the above technical solution, at least one electrode lead 33 of each pouch battery cell 30 is electrically connected to the battery monitoring unit 61 through the conductive member 70, such that the battery monitoring unit 61 can establish an electrical connection with each pouch battery cell 30, and thus the battery monitoring unit 61 can monitor the state of each pouch battery cell 30, thus improving the fineness of the monitoring and management performed by the battery management system.

Referring to FIG. 4 to FIG. 6, according to some embodiments of the present application, optionally, a corner space 310 is formed at the corner of the packaging bag 31 along the third direction, the conductive member 70 is at least partially located in the corner space 310, and the conductive member 70 extends along the second direction.

Specifically, the packaging bag 31 includes a first face 311 and a second face 312 connected to each other, the first face 311 is parallel to the plane where the first direction and the second direction are located, and the second face 312 is parallel to the plane where the second direction and the third direction are located. The junction of the first face 311 and the second face 312 is located at the end part of the second face 312 along the third direction and forms a circular arc transition face. The circular arc transition face at the junction of the first face 311 and the second face 312 extends along the second direction, and the circular arc transition face and the extension planes of the first face 311 and the second face 312 jointly define the corner space 310. The end parts of the conductive member 70 may be connected to the electrical member 60 and the electrode lead 33, respectively, and the part of the conductive member 70 between the two end parts connected to the electrode lead 33 and the electrical member 60 extends along the second direction and is accommodated in the corner space 310.

Further, the conductive member 70 may be attached to the outer wall surface of the packaging bag 31 in the corner space 310.

In the above technical solution, the corner space 310 is formed at the corner of the packaging bag 31 along the third direction, the conductive member 70 is at least partially located in the corner space 310, the conductive component 70 extends along the second direction, and the corner of the packaging bag 31 along the third direction also extends along the second direction, such that the conductive member 70 can extend in the corner space 310, thereby fully using the volume space occupied by the pouch battery cell 30 to accommodate the conductive member 70 and improving the space utilization rate.

Referring to FIG. 3 and FIG. 7, according to some embodiments of the present application, optionally, the conductive member 70 includes a first end part 71 and a second end part 72 opposite to each other, the first end part 71 is welded or bonded to the electrode lead 33, and the second end part 72 is electrically connected to the battery monitoring unit 61.

Specifically, the first end part 71 and the second end part 72 are two end parts of the conductive member 70 opposite to each other along the second direction. The first end part 71 may be welded to the part of the electrode lead 33 protruding from the packaging bag 31 or may be bonded to the part of the electrode lead 33 protruding from the packaging bag 31 through a conductive adhesive or an insulating tape. The second end part 72 may be in direct contact connection to the battery monitoring unit 61 or may be indirectly connected to the battery monitoring unit 61 through the electrical connecting member 62.

In the above technical solution, by allowing the first end part 71 of the conductive member 70 to be welded or bonded to the electrode lead 33, the stability of the connection between the first end part of the conductive member and the electrode lead can be improved; the second end part 72 is electrically connected to the battery monitoring unit 61, such that the first end part 71 of the conductive member 70 can sample the voltage of the connected pouch battery cell 30, and the voltage information acquired by sampling is transmitted to the battery monitoring unit 61 through the second end part 72, thereby ensuring the accuracy and stability of sampling. The conductive member 70 enables voltage sampling while realizing electrical connection, and thus the number of components and parts can be reduced and the installation space can be saved.

In some embodiments, the part of the conductive member 70 between the first end part 71 and the second end part 72 may be fixedly connected to the packaging bag 31 by a fixing member (not shown). the number of fixing members may be plural, and the plurality of fixing members are arranged at intervals along the extending direction of the conductive member 70. The fixing member includes, but is not limited to, an adhesive tape, a structural adhesive, a tie, a wire clip, and the like.

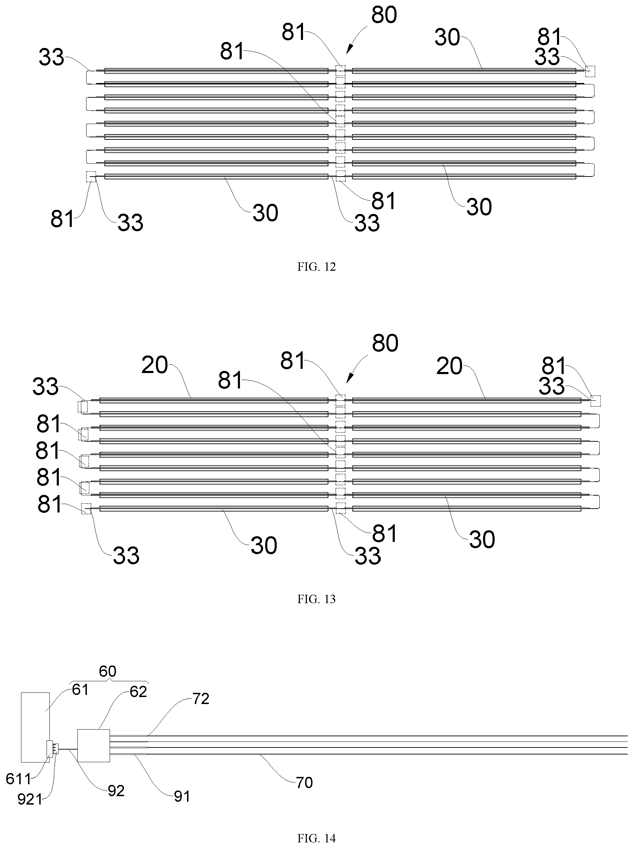

Referring to FIG. 14, according to some embodiments of the present application, optionally, the electrical member 60 includes an electrical connecting member 62, the battery apparatus 100 includes first patch cords 91 and a second patch cord 92, the first patch cords 91 and the second patch cord 92 are all connected to the electrical connecting member 62, the second end parts 72 of a plurality of conductive members 70 are connected to the electrical connecting member 62 through corresponding first patch cords 91, and an end of the second patch cord 92 distal to the electrical connecting member 62 is connected to the battery monitoring unit 61.

It should be noted that FIG. 14 shows the connection of the electrical connecting member 62, the battery monitoring unit 61, and the conductive member through the first patch cord 91 and the second patch cord 92 in a modularized form, and the positions and shapes of the components in the drawing are not used to indicate the actual positional relationship and the actual form. For example, the conductive member 70, the first patch cord 91 and the second patch cord 92 are both flexible components and are often arranged on the surface or in the gap of the pouch battery cell 30, the electrical member 60, or the case 10 during the actual assembly process to obtain structural support and fix the position.

Specifically, a plurality of first patch cords 91 are provided and are in a one-to-one correspondence to the conductive members 70. The first end parts 71 of the plurality of conductive members 70 are respectively welded or bonded to the electrode leads 33 of the plurality of pouch battery cells 30, and the second end parts 72 of the plurality of conductive members 70 are connected to the electrical connecting member 62 through corresponding first patch cords 91, such that the plurality of pouch battery cells 30 are all electrically connected to the electrical connecting member 62. The electrical connecting member 62 is connected to the battery monitoring unit 61 through the second patch cord 92, and the second patch cord 92 can gather information transmitted by all the second patch cords 92 connected to the electrical connecting member 62, such that the plurality of pouch battery cells 30 are electrically connected to the battery monitoring unit 61.

In the above technical solution, the second end parts 72 of the plurality of conductive members 70 are connected to the electrical connecting member 62 through corresponding first patch cords 91, and an end of the second patch cord 92 distal to the electrical connecting member 62 is connected to the battery monitoring unit 61, such that the plurality of conductive members 70 are gathered and then connected to the battery monitoring unit 61, thereby simplifying the electrical connection line between the conductive members 70 and the battery monitoring unit 61 and facilitating the identification, assembling, and maintenance while saving the installation space.

Referring to FIG. 14, according to some embodiments of the present application, optionally, the second patch cord 92 has a first connector 921 connected at an end thereof distal to the electrical connecting member 62, the battery monitoring unit 61 is provided with a second connector 611, and the first connector 921 is in plug connection with the second connector 611.

Specifically, the first connector 921 may be a plug, and the first connector 921 forms connection terminals protruding from an end surface of the first connector 921. The second connector 611 may be a socket, and the second connector 611 is provided with connection terminals recessed with respect to the surface of the second connector 611. The connection terminals of the first connector 921 are inserted into the second connector 611 and are held in contact with the connection terminals of the second connector 611, thereby achieving the electrical connection between the second patch cord 92 and the battery monitoring unit 61.

For another example, the first connector 921 being in plug connection with the second connector 611 may be that the second connector 611 is partially inserted into the first connector 921.

In the above technical solution, the second patch cord 92 has the first connector 921 connected at an end thereof distal to the electrical connecting member 62, the battery monitoring unit 61 is provided with the second connector 611, and the first connector 921 is in plug connection with the second connector 611, such that the connection or disconnection of the circuit between the battery monitoring unit 61 and the second patch cord 92 can be realized by plugging or unplugging the first connector 921 or the second connector 611, and this is easy to operate and is beneficial to improving the assembly efficiency of the battery apparatus.

According to some embodiments of the present application, optionally, the conductive member 70 is at least one of a flexible circuit board and a wire harness.

For example, a plurality of conductive members 70 are provided, and the plurality of conductive members 70 are flexible circuit boards. The conductive member 70 may include a first end part 71 and a second end part 72 that are led out from the flexible circuit board, the first end part 71 is connected to the electrode lead 33, and the second end part 72 is connected to the electrical member 60. Further, the conductive member 70 may be a flexible flat cable (FFC).

For example, a plurality of conductive members 70 are provided, and the plurality of conductive members 70 are each a wire harness.

For another example, a plurality of conductive members 70 are provided, and the plurality of conductive members 70 may include a number of flexible circuit boards and a number of wire harnesses.

The lengths of the plurality of conductive members 70 extending along the second direction are not equal. Some of the conductive members 70 are connected to the electrode leads 33 of the pouch battery cells 30 that are farther away from the electrical member 60, and thus the lengths of these conductive member 70 is longer; some of the conductive members 70 are connected to the electrode leads 33 of the pouch battery cells 30 that are closer to the electric element 60, and the lengths of these conductive members 70 are shorter.

In the above technical solution, the conductive member 70 is at least one of a flexible circuit board and a wire harness, and the conductive member 70 has good flexibility, such that the conductive members 70 have good adaptability when arranged in the irregular structural space between the end parts of the plurality of packaging bags 31 and the electrical member 60, and this is beneficial to saving the installation space of the conductive members 70.

Referring to FIG. 12, according to some embodiments of the present application, optionally, the electrical member 60 includes a battery monitoring unit 61, all the pouch battery cells 30 are arranged in series, and the battery monitoring unit 61 acquires parameters of the pouch battery cells 30 through sampling parts 81 connected to the electrode leads 33. A sampling assembly 80 includes the electrical member 60 and a plurality of sampling parts 81, and the plurality of sampling parts 81 are connected to the electrical member 60.

Specifically, the pouch battery cell 30 includes two electrode leads 33, the two electrode leads 33 are respectively disposed at two end parts of the packaging bag 31 along the second direction, and the two electrode leads 33 are respectively a positive electrode lead 33 and a negative electrode lead 33. The plurality of pouch battery cell 30 in the pouch battery cell assembly 20 are arranged along the first direction, and along the first direction, the positive electrode lead 33 (or negative electrode lead 33) of a previous pouch battery cell 30 is electrically connected to the negative electrode lead 33 (or positive electrode lead 33) of a next pouch battery cell 30, such that the plurality of pouch battery cell 30 in the pouch battery cell assembly 20 are sequentially connected in series.

The battery apparatus 100 may include a plurality of pouch battery cell assemblies 20. The plurality of pouch battery cell assemblies 20 may be arranged along the second direction and are all connected in series, and the plurality of pouch battery cells 30 in each pouch battery cell assembly 20 are arranged in series. For example, two pouch battery cells 30 at the head or the end in the first direction of two pouch battery cell assemblies 20 adjacent to each other along the second direction are connected in series.

In the above technical solution, by allowing all the pouch battery cells 30 to be connected in series, the battery apparatus 100 can have relatively high output voltage, and all the pouch battery cells 30 form a unidirectional current path after being connected in series, thus facilitating the acquisition of the parameters of the pouch battery cells by the sampling parts 81 and also being beneficial to simplifying the algorithm by which the battery management system processes the acquired parameters of the pouch battery cells 30.

Referring to FIG. 12, according to some embodiments of the present application, optionally, on the current path, the number of pouch battery cells 30 between at least two adjacent sampling parts 81 is greater than or equal to two.

Specifically, all the pouch battery cells 30 in the battery apparatus 100 may be arranged in series to form a unidirectional current path. A number of sampling parts 81 are arranged on the current path, and the sampling parts 81 may be connected to the electrode leads 33 and acquire the voltage, current, and other parameters of the electrode leads 33 at corresponding positions in the current path. For example, along the current direction of the current path, the number of pouch battery cells 30 between two adjacent sampling parts 81 may be one, two, three, four, six, or more, and the number of pouch battery cells 30 between every two adjacent sampling parts 81 may be unequal, where there are two or more pouch battery cells 30 between at least one set of two adjacent sampling parts 81.

In the above technical solution, two adjacent sampling parts 81 on the current path can acquire parameters of the pouch battery cells 30 between the two sampling parts 81, and there are at least two adjacent sampling parts 81 in the battery apparatus 100 that can acquire parameters of two or more pouch battery cells 30, such that the number of sampling parts 81 can be correspondingly reduced, the wire harnesses connected to the sampling parts 81 can also be shortened and simplified, and thus the installation space is saved and the cost can also be reduced to some extent.

Referring to FIG. 12, according to some embodiments of the present application, optionally, on the current path, the two electrode leads 33 of the first pouch battery cell 30 and those of the last pouch battery cell 30 all have a sampling part 81 connected.

Specifically, each pouch battery cell 30 includes one positive electrode lead 33 and one negative electrode lead 33, and the positive electrode lead 33 and the negative electrode lead 33 may be respectively disposed at end parts of the pouch battery cell 30 along the second direction. On the current path, the positive electrode lead 33 of the previous pouch battery cell 30 is connected to the negative electrode lead 33 of the next pouch battery cell 30, or the negative electrode lead 33 of the previous pouch battery cell 30 is connected to the positive electrode lead 33 of the next pouch battery cell 30, such that all the pouch battery cells 30 are sequentially connected in series.

A plurality of sampling parts 81 are provided, where the first sampling part 81 is connected to the electrode lead 33 not connected to the next pouch battery cell 30 of the first pouch battery cell 30 along the current path, and the last sampling part 81 is connected to the electrode lead 33 not connected to the previous pouch battery cell 30 of the last pouch battery cell 30 along the current path. That is, the first sampling part 81 and the last sampling part 81 are provided at the start point and the end point of the current path, respectively.

In the above technical solution, on the current path, the electrode leads 33 of the first pouch battery cell 30 and the last pouch battery cell 30 all have the sampling parts 81 connected, such that the parameters of the first pouch battery cell 30 and the last pouch battery cell 30 can be acquired by the sampling parts 81, the comprehensiveness of sampling is ensured, and thereby the reliability of the management strategy of the battery management system is improved.

Referring to FIG. 12, according to some embodiments of the present application, optionally, on the current path, between the first pouch battery cell 30 and the last pouch battery cell 30, there are two pouch battery cells 30 between two adjacent sampling parts 81.

Specifically, on the current path, between the first pouch battery cell 30 and the last pouch battery cell 30, there are two pouch battery cells 30 between every two adjacent sampling parts 81, and every two adjacent sampling parts 81 can acquire parameters of two pouch battery cells 30 therebetween. The sampling parts 81 can transmit the parameters of the pouch battery cells 30 to the battery management system through the battery monitoring unit 61. The battery management system may obtain the estimated parameters of each pouch battery cell 30 between the first pouch battery cell 30 and the last pouch battery cell 30 by performing operation processing on the parameters of every two pouch battery cells 30 between the first and last pouch battery cells 30.

Illustratively, on the current path, every two adjacent sampling parts 81 can acquire the total voltage of the pouch battery cells 30 between the two adjacent sampling parts 81, and based on the total voltage and the number of pouch battery cells 30 between the two adjacent sampling parts 81, an average voltage can be obtained; this average voltage is used as the voltage parameter for each of the pouch battery cells 30.

Optionally, the specifications of the plurality of pouch battery cells 30 in the battery apparatus 100 are all the same. As such, the accuracy of the battery management system in obtaining the estimated parameters of each pouch battery cell 30 can be improved.

In the above technical solution, on the current path, between the first pouch battery cell 30 and the last pouch battery cell 30, there are two pouch battery cells 30 between two adjacent sampling parts 81. Compared with the case where the sampling parts 81 are separately provided at both ends of each pouch battery cell 30, the number of sampling parts 81 is reduced, and the sampling parts 81 can be connected to the battery monitoring unit 61 by using a relatively short wire harness, such that the installation space is saved, and the cost can be reduced to some extent.

Optionally, the number of pouch battery cells 30 between every two adjacent sampling parts 81 is not equal, where the number of pouch battery cells 30 between each of a number of sets of two adjacent sampling parts 81 is one, and the number of pouch battery cells 30 between each of the other sets of two adjacent sampling parts 81 is greater than or equal to two.

For example, the first sampling part 81 and the second sampling part 81 on the current path are connected to two electrode leads 33 of the first pouch battery cell 30, respectively, and the last two sampling parts 81 are connected to two electrode leads 33 of the last pouch battery cell 30, respectively.

In the above technical solution, the number of pouch battery cells 30 between each of a number of sets of two adjacent sampling parts 81 is one, and the number of pouch battery cells 30 between each of other sets of two adjacent sampling parts 81 is greater than or equal to two, such that the sampling precision is improved while the wire harness is shortened and the number of sampling parts 81 is reduced.

Referring to FIG. 13, according to some embodiments of the present application, optionally, the number of pouch battery cell assemblies 20 is at least two, and both electrode leads 33 of each pouch battery cell 30 in one of the pouch battery cell assemblies 20 are provided with a sampling part 81.

For example, two pouch battery cell assemblies 20 are arranged along the second direction, and every two pouch battery cells 30 adjacent along the second direction are connected in series, where all the pouch battery cells 30 in one pouch battery cell assembly 20 are sequentially connected in series through the pouch battery cells 30 in the other pouch battery cell assembly 20.

For example, both electrode leads 33 of each pouch battery cell 30 in one of the two pouch battery cell assemblies 20 are provided with a sampling part 81, and in the other one of the two pouch battery cell assemblies 20, two electrode leads 33 of every two pouch battery cells 30 that are far away from each other on the current path are each provided with a sampling part 81.

In the above technical solution, the number of pouch battery cell assemblies 20 is at least two, such that the overall output voltage of the battery apparatus can be increased; both electrode leads 33 of each pouch battery cell 30 in one of the pouch battery cell assemblies 20 are provided with a sampling part 81, and each pouch battery cell 30 in this pouch battery cell assembly 20 can be independently sampled, which improves the sampling precision and is beneficial to the accurate adjustment of the battery management strategy by the battery management system based on the sampling parameters.

According to some embodiments of the present application, optionally, the electrode leads 33 of two adjacent pouch battery cells 30 arranged along the second direction are connected and provided with a sampling part 81.

In the above technical solution, the electrode leads 33 of two adjacent pouch battery cells 30 arranged along the second direction are connected, such that electrical connection devices between the pouch battery cells 30 can be omitted or reduced, and the number of components and parts of the pouch battery cell assembly 20 is reduced, thereby saving the space occupied by the electrical connection devices and facilitating the improvement of the energy density of the pouch battery cell assembly 20; the connected electrode lead 33 of two adjacent pouch battery cell 30 arranged along the second direction are provided with a sampling part 81, such that the parameters of two adjacent pouch battery cells 30 along the second direction can be acquired, thus improving the sampling precision, enriching the variety of the sampling mode, and thereby improving the reliability of the decision-making of the battery management system.

Referring to FIG. 7 and FIG. 12, according to some embodiments of the present application, optionally, at least one electrode lead 33 of each pouch battery cell 30 is electrically connected to the battery monitoring unit 61 through a conductive member 70, the conductive member 70 includes a first end part 71 and a second end part 72 opposite to each other, and the first end part 71 forms the sampling part 81.

Specifically, the two ends of each pouch battery cell 30 along the second direction are respectively provided with an electrode lead 33, and the battery monitoring unit 61 is located at one side of the pouch battery cell assembly 20 along the second direction; the conductive member 70 may extend along the second direction, and the second end part 72 and the first end part 71 are two end parts of the conductive member 70 opposite to each other along the second direction, respectively. The first end part 71 is welded or bonded to the electrode lead 33 of the pouch battery cell 30 to form a sampling part 81. A plurality of conductive members 70 are provided, and the number of conductive members 70 is less than or equal to the number of electrode leads 33 and greater than or equal to the number of pouch battery cells 30.

In the above technical solution, at least one electrode lead 33 of each pouch battery cell 30 is electrically connected to the battery monitoring unit 61 through the conductive member 70, and the second end part 72 of the conductive member 70 forms a sampling part 81 and is connected to the electrode lead 33, such that the battery monitoring unit 61 can obtain parameters of each pouch battery cell 30 through the sampling part 81 and the conductive member 70, thereby improving the sampling precision and facilitating the accurate adjustment of the battery management strategy by the battery management system.

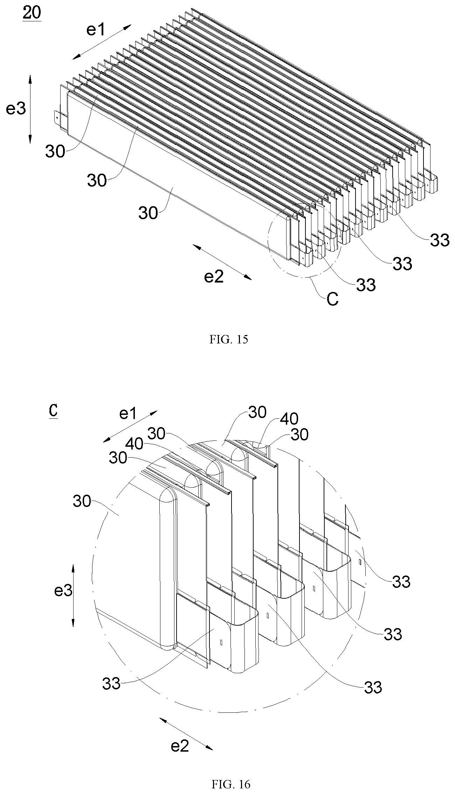

Referring to FIG. 15 to FIG. 17, according to some embodiments of the present application, optionally, in the first direction, a reinforcing partition plate 40 is sandwiched between at least two adjacent pouch battery cells 30, the reinforcing partition plate 40 is connected to the packaging bag 31, and the hardness of the reinforcing partition plate 40 is greater than that of the packaging bag 31.

For example, the reinforcing partition plate 40 may be a metal plate and the flexible shell may be an aluminum-plastic film.

The reinforced partition plate 40 being sandwiched between two adjacent pouch battery cells 30 includes the following: a reinforcing partition plate 40 is disposed between part of adjacent pouch battery cells 30, and no reinforcing partition plate 40 is disposed between the other part of adjacent pouch battery cells 30; or a reinforcing partition plate 40 is disposed between every two adjacent pouch battery cells 30.

The reinforcing partition plate 40 and the flexible shell of the pouch battery cell 30 may be fixed by bonding.

In the above technical solution, by disposing a reinforcing partition plate 40 between adjacent pouch battery cells 30 and allowing the hardness of the reinforcing partition plate 40 to be greater than that of the flexible shell, the plurality of pouch battery cells 30 can be easily grouped, and the overall rigidity of the pouch battery cell assembly 20 formed by the plurality of pouch battery cells 30 formed in groups can be improved, thereby facilitating the installation of the pouch battery cell assembly 20 formed by the plurality of pouch battery cells 30 in groups and reducing the deformation of the pouch battery cells 30 after being grouped.

According to some embodiments of the present application, optionally, the thickness of the reinforcing partition plate 40 is less than the thickness of the pouch battery cell 30.

The thickness direction of the reinforcing partition plate 40 is the same as the thickness direction of the pouch battery cell 30. The pouch battery cell 30 may be disposed in a posture where the thickness direction thereof is parallel to the first direction and substantially perpendicular to the third direction.

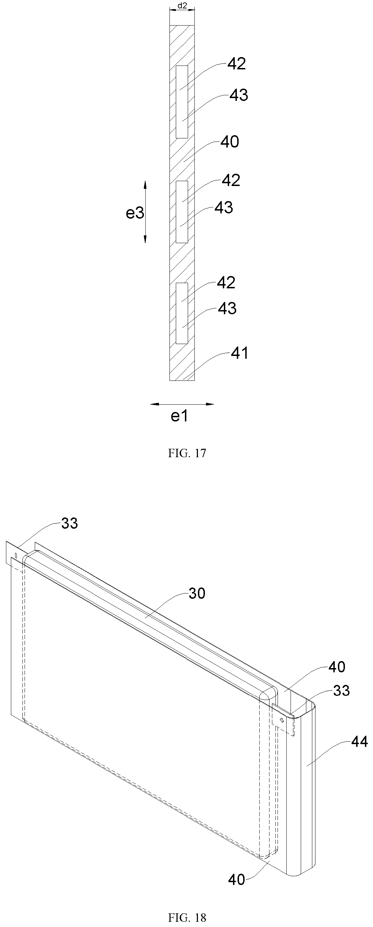

For example, referring to FIG. 17, the thickness of the reinforcing partition plate 40 is d2, the thickness of the pouch battery cell 30 is d3, and d2 is smaller than d3. For example, d2 ranges from 0.8 mm to 2.0 mm; for example, d2 is 0.8 mm, 1.0 mm, 1.2 mm, 1.4 mm, 1.6 mm, 1.8 mm, 2.0 mm, or the like.

In the above technical solution, by allowing the thickness of the reinforcing partition plate 40 to be less than the thickness of the pouch battery cell 30, the space occupied by the reinforcing partition plate 40 can be reduced while improving the overall rigidity of the plurality of pouch battery cells 30 in groups, and particularly, the space occupied by the reinforcing partition plate 40 in the thickness direction of the pouch battery cell 30 can be reduced, such that the overall energy density of the battery apparatus 100 is relatively high.

According to some embodiments of the present application, optionally, the reinforcing partition plate 40 is a metal plate.

In some embodiments, the reinforcing partition plate 40 is an aluminum plate, an aluminum alloy plate, a copper plate, or a steel plate.

In the above technical solution, by allowing the reinforcing partition plate 40 to be provided as an aluminum plate, an aluminum alloy plate, a copper plate, or a steel plate, the reinforcing partition plate 40 can have relatively high strength and hardness, such that the overall rigidity of the plurality of pouch battery cells 30 in groups can be better improved, and the deformation of the pouch battery cells 30 in groups can be better reduced.

According to some embodiments of the present application, optionally, the reinforcing partition plate 40 is a heat-conducting member and is in heat conducting connection with the packaging bag 31.

For example, the reinforcing partition plate 40 may be in heat conducting connection with the packaging bag 31 through a heat-conducting glue. Because the reinforced partition plate 40 is a heat-conducting member, the reinforcing partition plate 40 may transmit heat to the pouch battery cell 30 or may absorb heat generated by the pouch battery cell 30, such that the temperature of the pouch battery cell 30 can be adjusted.

In the above technical solution, by allowing the reinforcing partition plate 40 to be provided as a heat-conducting member and be in heat conducting connection with the packaging bag 31, the reinforcing partition plate 40 can play the thermal management function while improving the overall rigidity of the pouch battery cells 30 after being grouped. Through the heat exchange between the reinforcing partition plate 40 and the pouch battery cell 30, the temperature of the pouch battery cell 30 can be adjusted, such that the pouch battery cell 30 works in suitable temperature range.

According to some embodiments of the present application, optionally, the reinforcing partition plate 40 is a solid structure.

For example, the reinforcing partition plate 40 may be a solid aluminum plate, aluminum alloy plate, copper plate, or steel plate.

In the above technical solution, by allowing the reinforcing partition plate 40 to be provided as a solid structure, the reinforcing partition plate 40 can have relatively good structural strength and rigidity and play an effectual reinforcing effect in the case that the thickness of the reinforcing partition plate 40 is relatively small, which is beneficial to allowing the pouch battery cell assembly 20 to have relatively high volumetric energy density as a whole while allowing the pouch battery cell assembly 20 to have relatively good intensity and rigidity as a whole.

According to some embodiments of the present application, optionally, the reinforcing partition plate 40 has a cavity 42 formed therein.

For example, referring to FIG. 17, the cavities 42 formed in the reinforcing partition plate 40 may be a plurality of cavities arranged at intervals, the plurality of cavities 42 in the reinforcing partition 40 may be arranged at intervals along the width direction of the pouch battery cell 30, and each cavity 42 may extend along the length direction of the pouch battery cell 30.

In the above technical solution, by providing cavities 42 in the reinforcing partition plate 40, the cavities 42 in the reinforcing partition plate 40 can play the effect of absorbing the expansion deformation of the pouch battery cell 30 while the reinforcing partition plate 40 enhances the overall rigidity of the pouch battery cells 30 after being grouped; the cavities 42 in the reinforcing partition plate 40 can provide the buffering for the deformation of neighboring pouch battery cells 30 and is beneficial to reducing the weight of the reinforcing partition plate 40.

Referring to FIG. 17, according to some embodiments of the present application, optionally, the cavity 42 includes a heat exchange flow channel 43 for the flow of a heat exchange medium.

The reinforcing partition plate 40 can serve as at least part of a thermal management component when at least a part of the cavity 42 of the reinforcing partition plate 40 serves as the heat exchange flow channel 43.

For example, the reinforcing partition plate 40 may be connected to the pouch battery cell 30 through a heat-conducting glue, such that the heat exchange between the reinforcing partition plate 40 and the pouch battery cell 30 may be conveniently achieved. In the process of flowing through the heat exchange flow channel 43, the heat exchange medium may adjust the temperature of the pouch battery cell 30; for example, the temperature of the pouch battery cell 30 may be increased or decreased.

In the above technical solution, at least a part of the cavity 42 in the reinforcing partition plate 40 forms the heat exchange flow channel 43, and the heat exchange medium can exchange heat with the pouch battery cell 30 by flowing through the heat exchange flow channel 43 in the reinforcing partition plate 40, such that the temperature of the pouch battery cell 30 can be effectively adjusted.

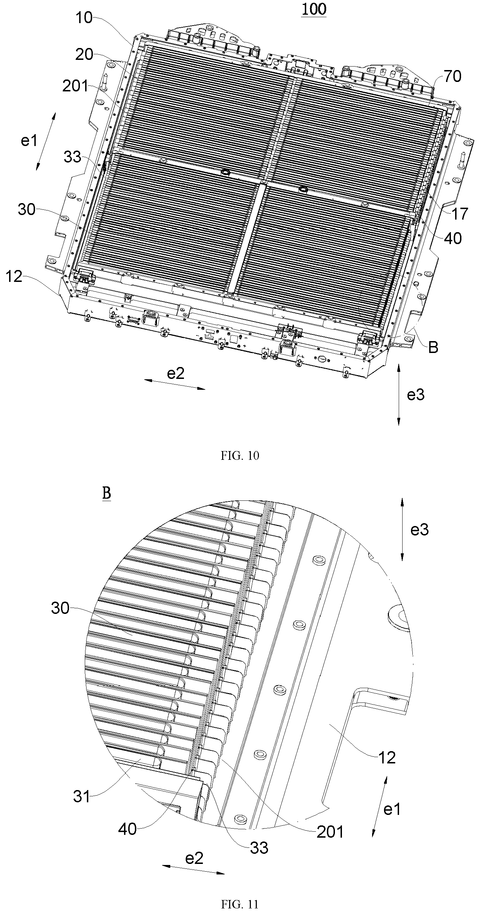

Referring to FIG. 11 and FIG. 17, according to some embodiments of the present application, optionally, the reinforcing partition plate 40 includes a connecting part 41 protruding with respect to the packaging bag 31 along the second direction, and the connecting part 41 is located at a side of the electrode lead 33 facing away from the electrical member 60.

When the reinforcing partition plate 40 has a cavity 42 formed therein, the cavity 42 may not extend to the connecting part 41, that is, the connecting part 41 may be a solid structure.

In the above technical solution, by allowing the end parts of the reinforcing partition plates 40 along the second direction to protrude from the packaging bags 31 of the pouch battery cells 30 and to be connected to the case 10, because the reinforcing partition plates 40 are sandwiched between a plurality of pouch battery cells 30 and form the pouch battery cell assembly 20 with a plurality of pouch battery cells 30 in groups, and the hardness of the reinforcing partition plate 40 on the whole is greater than that of the packaging bag 31 of the pouch battery cell 30, the pouch battery cell assembly 20 as a whole can be allowed to have relatively good strength and rigidity.

In some embodiments, the connecting part 41 may be connected to the case 10. As such, the connection of the connecting part 41 to the case 10 allows the pouch battery cell assembly 20 to be connected fixedly to the side wall of the case 10, and the connecting part 41 being a solid structure can allow the connection between the pouch battery cell assembly 20 and case 10 to be relatively reliable, such that the installation reliability and the stability of the pouch battery cell assembly 20 at the case 10 can be improved.

Referring to FIG. 18, according to some embodiments of the present application, optionally, in the first direction, two adjacent reinforcing partition plates 40 are connected by a connecting plate 44, and the pouch battery cell 30 is accommodated in a space formed by the enclosure of the connecting plate 44 and two reinforcing partition plates 40.

Specifically, the connecting plate 44 connects the end parts of the two reinforcing partition plates 40 on the same side in the second direction. The connecting plate 44 may be a flat plate or an arc-shaped plate with a relatively small degree of curvature, and the connection plate 44 is generally parallel to the first direction. The connecting plate 44 and the two reinforcing partition plates 40 to which the connecting plate 44 is connected can be assembled to form a frame resembling the letter "U" and enclose the pouch battery cell 30 between the two reinforcing partition plates 40.

In the above technical solution, two adjacent reinforcing partition plates 40 are connected through the connecting plate 44, and the pouch battery cell 30 is accommodated in the space formed by the enclosure of the connecting plate 44 and the two reinforcing partition plates 40, such that the strength of the reinforcing partition plate 40 is improved, and the installation reliability and stability of the pouch battery cell 30 is further increased.

Referring to FIG. 18, according to some embodiments of the present application, optionally, two adjacent reinforcing partition plates 40 in the first direction and the connecting plate 44 connected thereto are integrally formed.

As an example, every two adjacent heating partition plates in the first direction and the connecting plate 44 between the two reinforcing partition plates 40 are fixedly connected and may be integrally formed.

In the above technical solution, by allowing two adjacent reinforcing partition plates 40 in the first direction and the connecting plate 44 connected between the two reinforcing partition plates 40 to be integrally formed, the strength of the reinforcing partition plates 40 is further improved, and the installation reliability and the structural stability of the pouch battery cell 30 are improved.

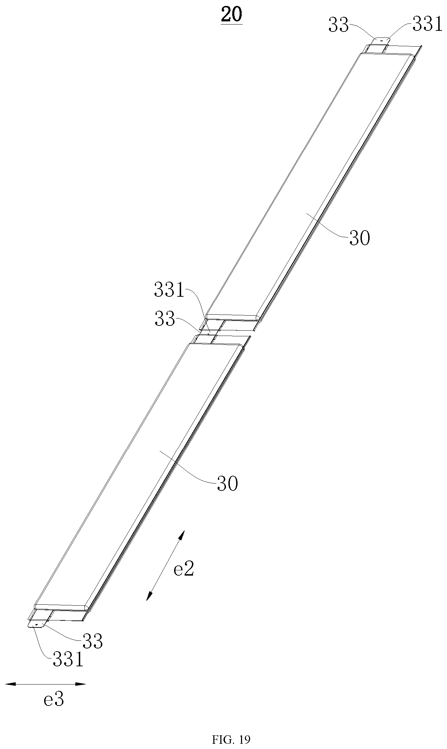

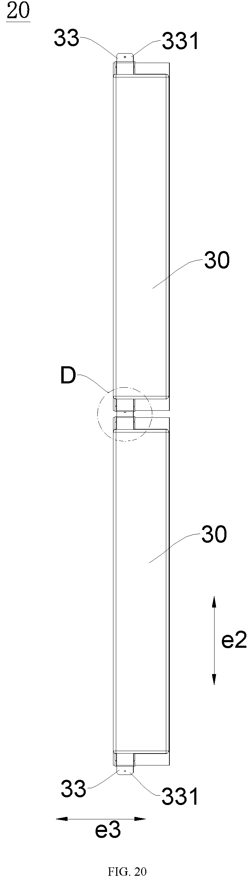

Referring to FIG. 19 to FIG. 21, according to some embodiments of the present application, optionally, the electrode leads 33 of two adjacent pouch battery cells 30 are directly connected.

It should be noted that the electrode leads 33 of two adjacent pouch battery cells 30 are directly connected, the part of the electrode lead 33 exposed outside the packaging bag is defined as a lead-out part 331, and the electrode leads 33 of two adjacent pouch battery cells 30 being directly connected is actually the lead-out parts 331 of the two electrode leads 33 are directly connected.

The "direct connection" in the direct connection of the electrode leads 33 of two adjacent pouch battery cells 30 means that without using an electrical connection device, the electrode leads 33 of the two pouch battery cells 30 are directly connected to realize the electrical connection between the two adjacent pouch battery cells 30.

The electrical connection between two adjacent pouch battery cells 30 may be connection in series.

In the above technical solution, by allowing the electrode leads 33 of two adjacent pouch battery cells 30 in the pouch battery cell assembly 20 to be directly connected, the electrical connection device between the pouch battery cells 30 can be omitted or reduced in number, and thus the number of components and parts of the pouch battery cell assembly 20 can be reduced, such that the space occupied by the electrical connection device can be saved, and the improvement in the energy density of the pouch battery cell assembly 20 is facilitated; besides, since the electrical connection device between the pouch battery cells 30 is omitted or reduced in number, the cost can also be reduced.

According to some embodiments of the present application, optionally, the electrode leads 33 of two adjacent pouch battery cells 30 are connected by welding.

For example, the welding for the connection between the electrode leads 33 of two adjacent pouch battery cells 30 may be laser welding or ultrasonic welding.

In the above technical solution, by connecting the electrode leads 33 of two adjacent pouch battery cells 30 in the pouch battery cell assembly 20 by welding, the direct connection between terminals of two adjacent pouch battery cells 30 in the pouch battery cell assembly 20 is realized, such that the connection mode of the electrode leads 33 of two adjacent pouch battery cells 30 in the pouch battery cell assembly 20 is simple and reliable.

According to some embodiments of the present application, optionally, the electrode leads 33 of two adjacent pouch battery cells 30 are directly connected by a conductive adhesive.

In some embodiments, the electrode leads 33 of two adjacent pouch battery cells 30 are directly connected by a conductive adhesive.

For example, the conductive adhesive may be applied on one electrode lead 33 of one of the two adjacent pouch battery cells 30, and the electrode lead 33 of the other one of the two adjacent pouch battery cells 30 is connected to the electrode lead 33 coated with the conductive adhesive; alternatively, the electrode leads 33 of the two adjacent pouch battery cells 30 may both be coated with the conductive adhesive, and the two electrode leads 33 coated with the conductive adhesive may be connected by the conductive adhesive.

In the above technical solution, by connecting the electrode leads 33 of two adjacent pouch battery cells 30 in the pouch battery cell assembly 20 by a conductive adhesive, the direct connection between terminals of two adjacent pouch battery cells 30 in the pouch battery cell assembly 20 is realized, such that the connection mode of the electrode leads 33 of two adjacent pouch battery cells 30 in the pouch battery cell assembly 20 is simple and reliable.

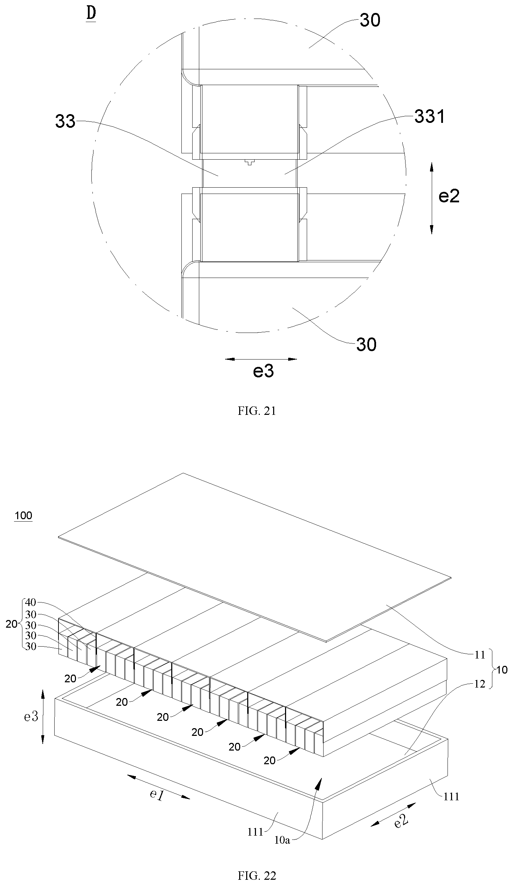

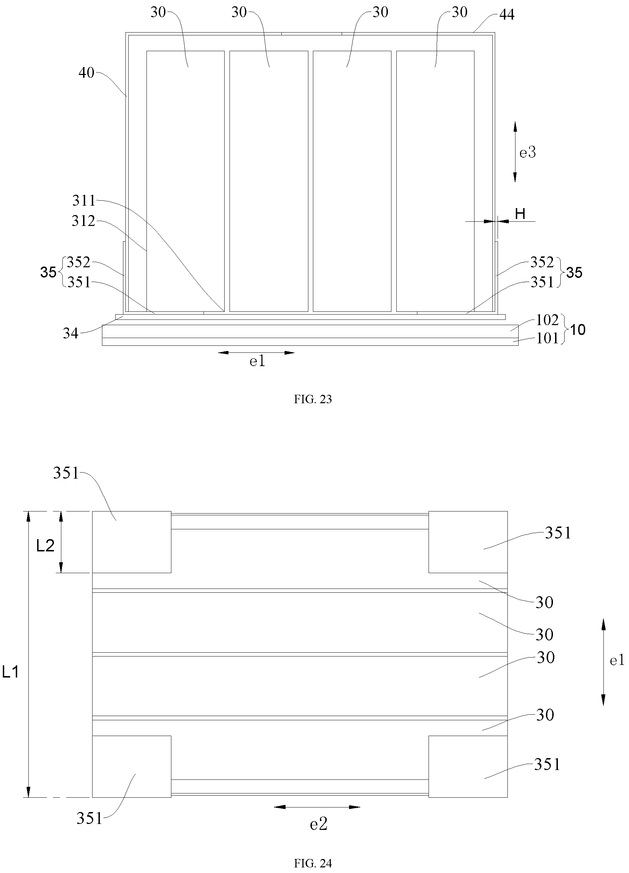

Referring to FIG. 22 and FIG. 23, according to some embodiments of the present application, optionally, a plurality of pouch battery cells 30 are sequentially bonded and matched along the first direction, the pouch battery cell 30 has a first face 311 and a second face 312, and the second face 312 is adjacent to the first face 311.

The battery apparatus 100 includes a glue layer 34 and a blocking member 35. The glue layer 34 is disposed on one side of the pouch battery cell assembly 20 where the first faces 311 are located and is used for bonding a plurality of pouch battery cells 30 to the case 10, and the blocking member 35 is located at least between at least one of the pouch battery cells 30 at each of the two ends of the pouch battery cell assembly 20 in the first direction and the glue layer 34 and is used for preventing the overflow of the glue layer 34 from the first face 311 of the pouch battery cell 30 to the second face 312 of the corresponding pouch battery cell 30.

Specifically, the glue layer 34 may refer to a layer structure formed by glue for bonding.

The blocking member 35 may refer to a structure or a component that is used for preventing the overflow of the glue layer 34 from the first face 311 of the pouch battery cell 30 to the second face 312 of the corresponding pouch battery cell 30. Illustratively, the blocking member 35 may be L-shaped and a part thereof may cover the first face 311, thereby preventing the glue overflow to the second face 312; the blocking member 35 may also be a flat plate, a part thereof covers the first face 311, and the other part extends beyond the second face 312, such that when the glue overflows, the overflowed glue can be located on the other part of the blocking member 35 without being in contact with the second face 312, thereby also preventing the glue overflow.

The first face 311 and the second face 312 may refer to two surfaces of the pouch battery cell 30, and the first face 311 may be, but is not limited to, the bottom surface, the top surface, the side surface, or the like of the pouch battery cell 30 and may be fixed on the case 10 by the glue layer 34. The second face 312 may refer to a surface disposed adjacent to the first face 311, and the second face 312 may be one or more. For example, the second face 312 may be located at one end or both ends of the first face 311 in the first direction e1, may be located at one end or both ends of the first face 311 in the second direction e2, or may also be located at one end or both ends of the first face 311 in the first direction e1 and one end or both ends of the first face in the second direction e2. The second direction e2 may refer to the other of the length direction or the width direction of the case 10. Illustratively, the first direction e1 may refer to the length direction of the case 10, and the second direction e2 may refer to the width direction of the case 10.

In the battery apparatus 100 with the above structure, in the assembling stage, glue is applied between the first faces 311 of the plurality of pouch battery cells 30 of the pouch battery cell assembly 20 and the case 10 to form the glue layer 34. Since the blocking member 35 is located at least between at least one of the pouch battery cells 30 at each of the two ends of the pouch battery cell assembly 20 in the first direction e1 and the glue layer 34, the blocking member 35 can effectively reduce the risk of glue overflow from the first face 311 to the second face 312 during the process of applying glue. In this way, the risk of the formation of a hardened structure in the second face 312 of the pouch battery cell 30 caused by glue overflow can be effectively reduced, and when the pouch battery cell 30 expands or shifts, the risk of local stress concentration caused by the contact between the surface of the pouch battery cell 30 and the hardened structure can thus be reduced, which is beneficial to reducing the probability of the damage to the soft pack cell 30.

Secondly, the first face 311 of the pouch battery cell 30 can be spaced apart from the case 10 by the glue layer 34, such that the pouch battery cell 30 and the case 10 are not in contact with each other, and therefore the glue layer 34 can play an insulating role. Since the blocking member 35 is located at least between at least one of the pouch battery cells 30 at each of the two ends of the pouch battery cell assembly 20 in the first direction e1 and the glue layer 34, the blocking member 35 can increase the spacing between the first face 311 of the pouch battery cell 30 and the case 10, that is, enlarge the insulation gap between the first face 311 and the case 10. This is also beneficial to increasing the thickness of the glue layer 34, thereby further enhancing the insulation performance between the pouch battery cell 30 and the case 10.

In the above technical solution, by disposing the blocking member 35 at least between at least one of the pouch battery cells 30 at each of the two ends of the pouch battery cell assembly 20 in the first direction e1 and the glue layer 34, the risk of glue overflow from the first face 311 of the pouch battery cell 30 to the second face 312 during the process of applying glue at the assembly phase of the battery apparatus 100 can be reduced, the probability of the formation of a hardened structure on the second face 312 of the pouch battery cell 30 caused by glue overflow is reduced, and thereby the problem of local stress concentration on the surface of the pouch battery cell 30 can be alleviated, the risk of the damage to the pouch battery cell 30 can be reduced, and meanwhile the insulation between the first face 311 of the pouch battery cell 30 and the case 10 can be enhanced, which is thereby beneficial to improving the reliability of the pouch battery cell 30 and the reliability of the battery apparatus 100.

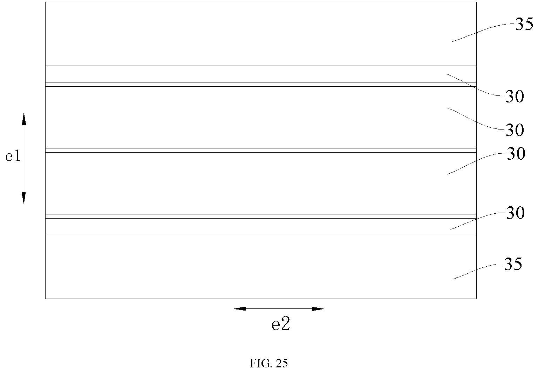

Referring to FIG. 24 and FIG. 25, according to some embodiments of the present application, optionally, the blocking member 35 covers at least the corner of the corresponding pouch battery cell 30.

It can be understood that the blocking member 35 may cover the first faces 311 of all the pouch battery cells 30 in the pouch battery cell assembly 20, may cover only the first faces 311 of the pouch battery cells 30 at the two ends in the first direction e1, or may cover only the corners of the first faces 311 of the pouch battery cells 30 at the two ends in the first direction e1. In all the above three cases, the blocking member 35 can cover at least the corner of the corresponding pouch battery cell 30.

When the glue is applied to the first faces 311 of all the pouch battery cells 30 of the pouch battery cell assembly 20, the glue spreads along the first direction e1 and the second direction e2 and accumulates at four corners of the pouch battery cell assembly 20, such that the probability of glue overflow at the corners of the pouch battery cell assembly 20 is higher than that at other positions.

In the above technical solution, by allowing the blocking member 35 to cover the corners of the corresponding pouch battery cell 30, the probability of glue accumulation at the corners of the outermost pouch battery cells 30 can be effectively reduced, thereby preventing the glue overflow. Meanwhile, this can also reduce the dimension of the blocking member 35 and the material consumption and also can ensure that a proper space is reserved on the first face 311 for glue application, thus enhancing the bonding strength between the pouch battery cell 30 and the case 10.

Referring to FIG. 25, according to some embodiments of the present application, optionally, the blocking member 35 covers at least the edge regions of the corresponding pouch battery cell 30 in the first direction e1.

It can be understood that in the above technical solution, the blocking member 35 may cover the first faces 311 of all the pouch battery cells 30 in the pouch battery cell assembly 20, may cover only the first faces 311 of the pouch battery cells 30 at the two ends in the first direction e1, or may cover only the edge regions of the corresponding pouch battery cell 30 in the first direction e1. In all the above three cases, the blocking member 35 can cover the edge regions of the corresponding pouch battery cell 30 in the first direction e1.

Since the plurality of the pouch battery cells 30 are arranged along the first direction e1, the second faces 312 of the pouch battery cells 30 at the two ends in the first direction e1 are generally large faces. By using the above technical solution, the blocking member 35 can not only reduce the risk of glue overflow to the second faces 312 where the corners of the pouch battery cell 30 are located, but also can reduce the risk of glue overflow to the large faces of the pouch battery cell 30, such that the probability of the formation of a hardened structure on the large face of the pouch battery cell 30 caused by the curing of overflowed glue can be reduced, thereby further reducing the risk of damage to the pouch battery cell 30.

In the above technical solution, by using the above technical solution, the blocking member 35 can reduce the risk of glue overflow to the second face 312 with a larger area of the pouch battery cell 30, such that the risk of the formation of a hardened structure at the edges of the pouch battery cell assembly 20 caused by glue overflow can be further reduced, and thereby the risk of damage to the pouch battery cell 30 is further reduced and the reliability of the battery apparatus 100 is improved.

In some embodiments of the present application, referring to FIG. 24, the blocking member 35 is disposed at the two ends of the pouch battery cell assembly 20 in the first direction e1, and in the first direction e1, the dimension of the pouch battery cell assembly 20 is L1, and the dimension of the blocking member 35 is L2, where 0.05 ≤ L2/L1.

L2/L1 may be, but is not limited to, 0.05, 0.07, 0.09, 0.10, 0.12, 0.15, 0.17, 0.2, 0.25, 0.3, and the like. That is, the dimension of the blocking member 35 may be selected accordingly based on the value of the dimension L1 of the pouch battery cell assembly 20. Illustratively, the dimension L2 of the blocking member 35 in the first direction e1 may be 5 mm, 6 mm, 7 mm, or the like.

It can be understood that the minimum value of L2/L1 is required to be greater than or equal to 0.05. If L2/L1 is less than 0.05, the size of the part of the blocking member 35 corresponding to the fist face 311 is relatively small, the area of the region of the first face 311 covered by the blocking member 35 is small, and thus the blocking member 35 does not have enough solid part to block the glue, there is an increased risk of glue overflow from the blocking member 35 to the second face 312, and the blocking member can not effectively prevent the glue overflow. Moreover, the small size of the part of the blocking member 35 corresponding to the first face 311 also increases the risk of a sharp object penetrating the first face 311 and thus the blocking member can not have good protection effect.

In the above technical solution, by allowing the ratio of the dimensions of the blocking member 35 and the pouch battery cell assembly 20 in the first direction e1 to be within the above range, the size of the blocking member 35 corresponding to the first face 311 can be in the appropriate range, which can not only better prevent the glue overflow from the first face 311 to the second face 312, but also can allow the blocking member to have good protection effect, reduce the risk of damage to the pouch battery cell 30 caused by the contact between a sharp object and the first face 311, and improve the reliability of the battery apparatus 100.

In some embodiments of the present application, the area of the orthographic projection plane of the blocking member 35 on the plane where the first face 311 is located is greater than or equal to the area of all first faces 311.

In some embodiments of the present application, referring to FIG. 23, the blocking member 35 includes a first portion 351 and a second portion 352 that are connected, the first portion 351 covers at least a part of the first face 311, and the second portion 352 is bent relative to the first portion 351 in a direction away from the glue layer 34.

It can be understood that the second portion 352 is arranged at an included angle relative to the first portion 351, and the angle between the two can be set as desired. Illustratively, the included angle between the second portion 352 and the first portion 351 is an obtuse angle, such that the blocking member 35 may be configured in a V-shape; the angle between the second portion 352 and the first portion 351 may also be a right angle, such that the blocking member 35 may be configured in an L-shape (see FIG. 23). Optionally, the first portion 351 and the first face 311 may be connected by a means including, but not limited to, hot-melting or bonding.

In the above technical solution, the first portion 351 can increase the gap between the first face 311 and the case 10, which is beneficial to enhancing the insulation between the pouch battery cell assembly 20 and the case 10. Since the second portion 352 is bent relative to the first portion 351, the second portion 352 may provide a better blocking effect, which is beneficial to further reducing the risk of glue spreading towards the second face 312 adjacent to the first face 311. The blocking member 35 with the above structure has a simple structure, can be easily manufactured, and thereby can reduce the cost.

In some embodiments of the present application, referring to FIG. 22 and FIG. 23, the pouch battery cell assembly 20 includes reinforcing partition plates 40 and a connecting plate 44. A plurality of pouch battery cells 30 are disposed between two reinforcing partition plates 40 adjacent along the first direction, and the reinforcing partition plates 40 and the connecting plate 44 form an opening opened toward the first face 311.

The reinforcing partition plates 40 can provide a relatively firm outside protective structure for the plurality of pouch battery cells 30, reduce the risk of damage to the pouch battery cells 30 caused by outside mechanical shock, and can also guarantee that pouch battery cells 30 are in the exact positions in the case 10 and thereby reduce the risk of poor contact because of the movement of the pouch battery cells 30.

In some embodiments of the present application, the blocking member 35 is made of an insulating material.

The insulating material may include, but is not limited to, a ceramic material, a glass material, a plastic material, a rubber material, a mica material, and the like, where the plastic material may include, but is not limited to, polypropylene, polyetherimide, and the like.

The blocking member 35 can enhance the insulation between the pouch battery cell assembly 20 and the case 10 by increasing the gap between the first face 311 and the case 10. On this basis, by allowing the blocking member 35 to be made of an insulating material, the blocking member 35 itself can have an insulating effect and further enhance the insulation between the pouch battery cell 30 and the case 10 and reduce risks such as short circuit, thereby improving the reliability of the pouch battery cell assembly 20.

In the above technical solution, by allowing the blocking member 35 to be made of an insulating material, the insulation between the first face 311 of the pouch battery cell 30 and the case 10 is further enhanced, and thereby the insulation between the pouch battery cell assembly 20 and the case 10 is improved, thus improving the reliability of the battery apparatus 100.

In some embodiments of the present application, referring to FIG. 23, the wall thickness of the blocking member 35 is H, where 1mm ≤ H ≤ 3 mm.

H may be, but is not limited to, 1 mm, 1.2 mm, 1.4 mm, 1.6 mm, 1.8 mm, 2.0 mm, 2.2 mm, 2.4 mm, 2.6 mm, 2.8 mm, 3 mm, and the like. It can be understood that if H is smaller than 1 mm, the thickness of the blocking member 35 is relatively small, and thus a relatively good protection performance and insulation performance cannot be achieved. For example, if the thickness of the blocking member 35 is relatively small, the risk that a machining burr of the case 10 or an external sharp object pierces the blocking member 35 and pierces the pouch battery cell 30 increases, and the effect of increasing the gap between the first face 311 and the case 10 is relatively poor, such that a relatively good insulation effect cannot be achieved; when the blocking member 35 is made of an insulating material, the blocking member 35 also cannot provide high insulation because it has a relatively small thickness.

Considering that the machining burr of the case 10 is generally smaller than 3 mm, if H is greater than 3 mm, a relatively large thickness of the blocking member 35 may result in excessive protection performance and a relatively large increased gap between the first face 311 and the case 10 as well, which has far satisfies the insulation requirement, and the insulating material of the blocking member 35 will also cause its own insulation to greatly exceed expectations, that is, if H is greater than 3 mm, the blocking member 35 will generate excessive protection performance and insulation performance and occupy a relatively large space, which is not favorable for the compact design of the battery apparatus 100 and is also not favorable for improving the energy density of the battery apparatus 100.

It should be noted that the wall thickness of the blocking member 35 may be selected to be different depending on the material of the blocking member 35. Illustratively, when the blocking member 35 is made of polyetherimide (PEI), the blocking member 35 has an insulation property while satisfying the function of preventing the glue overflow. In this case, the wall thickness of the blocking member 35 may be 2 mm, and the dimension of the part corresponding to the first face 311 in the first direction e1 may be 7 mm. When the blocking member 35 is made of aluminum, the blocking member may be designed to be L-shaped, and an insulating layer is disposed on the surface, in which case the thickness of the blocking member 35 may be 1 mm, and the dimension of the part corresponding to the first face 311 in the first direction e1 may be 5 mm. When the blocking member 35 is made of polypropylene (PP), the blocking member may also be designed to be L-shaped, the thickness of the blocking member 35 may be 1.5 mm, and the dimension of the part corresponding to the first face 311 in the first direction e1 may be 6 mm.

In the above technical solution, by allowing the wall thickness of the blocking member 35 to be within the above range, the thickness of the blocking member 35 can be reduced as much as possible while providing the protection and insulation properties, thereby saving the space occupied by the blocking member 35 and reducing the weight of the blocking member 35, such that the compact design of the battery apparatus 100 is facilitated, the weight of the entire battery apparatus 100 is reduced, and the energy density of the battery apparatus 100 can be improved.

In some embodiments of the present application, the energy density of the pouch battery cell 30 is E, and the melting point of the blocking member 35 is T1, where when E ≤ 390 Wh/L, T1 > 150 °C, and when E > 390 Wh/L, T1 > 200 °C.

When the energy density E of the pouch battery cell 30 is greater than or equal to 390 Wh/L, the temperature of the pouch battery cell 30 when thermal runaway occurs exceeds 200 °C. Therefore, the material with the melting point greater than 200 °C can be selected for the blocking member 35, such that the risk of impaired performance of the blocking member 35 due to melting when thermal runaway occurs can be reduced, and the high temperature resistance of the blocking member 35 is improved. When the energy density E of the pouch battery cell 30 is less than 390 Wh/L, the temperature of the pouch battery cell 30 when thermal runaway occurs is less than 150 °C. Therefore, the material with the melting point greater than 150 °C can be selected for the blocking member 35, such that the cost reduction is facilitated while the high temperature resistance of the blocking piece 35 is satisfied.

For example, when the blocking member 35 is made of polypropylene (PP), the melting point is greater than or equal to 150 °C; when the blocking member 35 is made of polyetherimide (PEI), the melting point is greater than or equal to 250 °C; when the blocking member 35 is made of polyimide (PI), the melting point is greater than or equal to 300 °C; when the blocking member 35 is made of aluminum with an insulating layer, the melting point is greater than or equal to 660 °C; when the blocking member 35 is made of steel with an insulating layer, the melting point is 1000 °C.

In the above technical solution, by allowing the melting point of the blocking member 35 and the energy density of the pouch battery cell 30 to be within the above range, the blocking member 35 can have suitable high temperature resistance, and the reliability of the blocking member 35 is improved, such that the reliability of the battery apparatus 100 can be improved while taking the cost of the blocking member 35 into consideration, which is beneficial to reducing the cost of the battery apparatus 100.

In some embodiments of the present application, referring to FIG. 22, the case 10 includes a plurality of case walls 111, the plurality of case walls 111 together define an accommodating space 10a, and the first faces 311 and the blocking members 35 are bonded to the case wall 111 by a glue layer 34.

The case walls 111 may refer to wall plates that form the case 10 in an enclosing manner. The plurality of case walls 111 may include a top cover 11, a bottom plate 12, the side case wall, and the like. In the above technical solution, the first faces 311 of the pouch battery cells 30 may be bonded to and fixed on one of the top cover 11, the bottom plate 12, and the side case wall through the glue layer 34.

In the above technical solution, the first faces 311 of the pouch battery cells 30 and the blocking member 35 may be bonded to and fixed on the case wall 111 of the case 10 through the glue layer 34, such that the connection between the pouch battery cells 30 and the case 10 is more secure.

In some embodiments of the present application, referring to FIG. 23, the case 10 includes a case body 101 and a heat exchange plate 102. The heat exchange plate 102 is connected to the case body 101 and defines the accommodating space 10a together with the case 101, and the first faces 311 and the blocking members 35 are bonded to the heat exchange plate 102 by the glue layer 34.

The heat exchange plate 102 may refer to a component that can exchange heat with the pouch battery cell 30 to adjust the temperature of the pouch battery cell 30. Illustratively, the heat exchange plate 102 may be a cold plate. In this technical solution, the heat exchange plate 102 and the case body 101 may together form the case 10. The heat exchange plate 102 may serve as one case wall 111 of the case 10. For example, the case body 101 has no bottom wall, and the heat exchange plate 102 is connected to the bottom of the case body 101 and serves as the bottom wall of the entire case 10; the heat exchange plate 102 may be disposed on any one of the wall plates of the case 101, and together with the corresponding wall plate, forms one wall 111 of the case 10.

In the above technical solution, by allowing the first faces 311 of the pouch battery cells 30 and the blocking members 35 to be bonded to and fixed on the heat exchange plate 102 through the glue layer 34, the heat exchange plate 102 can highly efficient exchange heat with the pouch battery cells 30 to quickly adjust the temperature of the pouch battery cells 30, which is beneficial to improving the reliability of the pouch battery cells 30 and thereby improving the reliability of the battery apparatus 100.

Optionally, the heat exchange plate 102 is disposed at the bottom of the case body 101.

According to some embodiments of the present application, optionally, the pouch battery cell 30 is any one of a lithium iron phosphate cell, a ternary cell, and a solid-state cell.

The solid-state cell may be, but is not limited to, a polymer solid-state cell, an oxide solid-state cell, a sulfide solid-state cell, a halide solid-state cell, or the like. The solid-state cell may also be a semi-solid-state cell or an all-solid-state cell.

In the above technical solution, when the aforementioned types of batteries are used as the pouch battery cell 30, more options may be provided for the design of the battery apparatus so as to meet different use requirements. When the pouch battery cell 30 is a lithium iron phosphate cell, it offers advantages of high reliability, long cycle life, light weight, high capacity, and low internal resistance. When the pouch battery cell 30 is a ternary cell, it offers advantages of high energy density and excellent electrochemical performance. When the pouch battery cell 30 is a solid-state cell, it offers advantages of high energy density, high reliability, light weight, and good performance at both high and low temperatures.

According to some embodiments of the present application, optionally, the pouch battery cell 30 is a lithium iron phosphate cell, and in the positive electrode material of the pouch battery cell 30, the amount ratio of the positive electrode active material, the binder, and the conductive agent is 96:(1-3):(1-3); the pouch battery cell 30 is a ternary cell, and in the positive electrode material of the pouch battery cell 30, the amount ratio of the positive electrode active material, the binder, and the conductive agent is 96:(2-3):(1-2).

In some embodiments, the positive electrode of the pouch battery cell 30 may be a positive electrode plate. The positive electrode plate may include a positive electrode current collector and a positive electrode film layer disposed on at least one surface of the positive electrode current collector, and the positive electrode film layer includes a positive electrode active material.

As an example, the positive electrode current collector has two surfaces opposite to each other in its own thickness direction, and the positive electrode film layer is disposed on any one or both of the two opposite surfaces of the positive electrode current collector.

As an example, a metal foil or a composite current collector may be used as the positive electrode current collector. For example, for the metal foil, stainless steel, copper, aluminum, nickel, carbon electrode, carbon, titanium, aluminum or stainless steel treated with silver on the surface, or the like may be used. The composite current collector may include a polymer material base layer and a metal layer. The composite current collector may be fabricated by forming a metal material (aluminum, aluminum alloy, nickel, nickel alloy, titanium, titanium alloy, silver and silver alloy, etc.) on a polymer material substrate (such as a substrate made of polypropylene, polyethylene terephthalate, polybutylene terephthalate, polystyrene, and polyethylene).

As an example, when the pouch battery cell 30 of the embodiments of the present application is a lithium-ion battery, the positive electrode active material may include at least one of the following materials: phosphates, layered transition metal oxides, and their respective modified compounds. Optionally, the positive electrode active material may include layered transition metal oxides and their respective modified compounds, which is beneficial to increasing the energy density of the pouch battery cell 30. However, the present application is not limited to these materials, and other traditional materials that can be used as positive electrode film layers for batteries may also be used. These positive electrode active materials may be used alone or in combination of two or more.

Examples of the phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

The layered transition metal oxide includes at least one of a compound with the general formula of LiₐNi_{b}Co_{c}M_{d}OₑA_{f} and a modified compound thereof, where 0.8 ≤ a ≤ 1.2, 0.3 ≤ b < 1, 0 < c < 1, 0 < d < 1, 1 ≤ e ≤ 2, 0 ≤ f ≤ 1, M includes at least one of Mn, Al, Zr, Zn, Cu, Cr, Mg, Fe, V, Ti, and B, and A includes at least one of N, F, S, and Cl. Optionally, 0.5 ≤ b < 1, and further optionally, 0.75 ≤ b ≤ 0.98.

Examples of the layered transition metal oxide may include, but are not limited to, at least one of (such as LiCoO₂), a lithium nickel oxide (such as LiNiO₂), a lithium manganese oxide (such as LiMnO₂ and LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM333), LiNi_{0.5}Co_{0.2}Mn_{0.3}O₂ (also referred to as NCM523), LiNi_{0.5}Co_{0.25}Mn_{0.25}O₂ (also referred to as NCM211), LiNi_{0.6}Co_{0.2}Mn_{0.2}O₂ (also referred to as NCM622), LiNi_{0.8}Co_{0.1}Mn_{0.1}O₂ (also referred to as NCM811), and LiNi_{0.9}Co_{0.05}Mn_{0.05}O₂ (also referred to as Ni90)), a lithium nickel cobalt aluminum oxide (such as LiNi_{0.80}Co_{0.15}Al_{0.05}O₂), and modified compounds thereof.

When the pouch battery cell 30 of the embodiments of the present application is a sodium-ion battery, the positive electrode active material may include, but is not limited to, at least one of a sodium-containing transition metal oxide, a polyanionic material (such as phosphate, fluorophosphate, pyrophosphate, and sulfate), and a Prussian blue material.

As an example, the positive electrode active material for use in the sodium-ion battery may include at least one of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian blue material, and a material with the general formula XₚM'_{q}(PO₄)ᵣOₓY₃₋ₓ. In the general formula XₚM'_{q}(PO₄)ᵣOₓY₃₋ₓ, 0 < p ≤ 4, 0 < q ≤ 2, 1 ≤ r ≤ 3, and 0 ≤ x ≤ 2, where X includes at least one of H⁺, Li⁺, Na⁺, K⁺, and NH4⁺, M' is a transition metal cation and is optionally at least one of V, Ti, Mn, Fe, Co, Ni, Cu, and Zn, and Y is a halogen anion and is optionally at least one of F, Cl, and Br.

In the embodiments of the present application, the modified compounds of the above positive electrode active materials may be obtained by doping modification and/or surface-coating modification of the positive electrode active materials, such as carbon-coating modification and fast-ionic conductor coating modification.

The pouch battery cell 30, during the charging and discharging process, undergoes deintercalation and consumption of active ions such as Li, and the molar content of Li varies when the pouch battery cell 30 is discharged to different states. In the examples of the positive electrode active material listed in the embodiments of the present application, the molar content of Li is in an initial state of the material, that is, a state before the material is added, and when the positive electrode active material is applied to a battery system, the molar content of Li may change after charge-discharge cycles.

In the examples of the positive electrode active material listed in the embodiments of the present application, the molar content of oxygen O is only a theoretical value. The molar content of oxygen O may change due to oxygen release from the crystal lattice, and actually, the molar content of oxygen O will fluctuate.

In the embodiments of the present application, the content of the element in the positive electrode active material has the meaning known in the art and can be detected by using devices and methods known in the art. For example, with reference to EPA 6010D-2014, inductively coupled plasma atomic emission spectrometry is used to determine the content using a plasma atomic emission spectrometer (ICP-OES, model: Thermo ICAP7400). First, 0.4 g of positive electrode active material is taken and weighed, and 10 mL (50% concentration) of aqua regia is added thereto. Then, the mixture is placed on a flat plate at 180 °C and left to stand for 30 min. After digested on the flat plate, the mixture is adjusted to a volume of 100 mL and undergoes a quantitative test by using a standard curve method.

In some embodiments, the foam metal or foam carbon may be used as the positive electrode. The foam metal may be foam nickel, foam copper, foam aluminum, foam alloy, or the like. When the foam metal is used as the positive electrode, the surface of the foam metal may not be provided with a positive electrode film layer. Certainly, the positive electrode film layer may also be provided. As an example, a lithium source material, a potassium metal, or a sodium metal may also be incorporated into or/and deposited in the foam metal; the lithium source material is a lithium metal and/or a lithium-rich material.

In some embodiments, the positive electrode film layer further optionally includes a positive electrode conductive agent. The embodiments of the present application do not particularly limit the type of the positive electrode conductive agent. As an example, the positive electrode conductive agent includes at least one of superconducting carbon, conductive graphite, acetylene black, carbon black, Ketjen black, a carbon dot, a carbon nanotube, graphene, and a carbon nanofiber. In some embodiments, the mass percentage of the positive electrode conductive agent in the positive electrode film layer is ≤ 5 wt%.

In some embodiments, the positive electrode film layer further optionally includes a positive electrode binder. The embodiments of the present application do not particularly limit the type of the positive electrode binder. As an example, the positive electrode binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin. In some embodiments, the mass percentage of the positive electrode binder in the positive electrode film layer is ≤ 5 wt%.

The positive electrode film layer is generally formed by coating a positive electrode current collector with a positive electrode slurry, drying, and cold pressing. The positive electrode slurry is generally formed by dispersing the positive electrode active material, an optional conductive agent, an optional binder, and any other components in a solvent and stirring them uniformly. The solvent may be N-methylpyrrolidone (NMP), but is not limited thereto.

In some embodiments, the negative electrode may be a negative electrode plate. The negative electrode plate may include a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

As an example, a metal foil, a foam metal, a foam carbon, or a composite current collector may be used as the negative electrode current collector. For example, for the metal foil, aluminum or stainless steel treated with silver on the surface, stainless steel, copper, aluminum, nickel, carbon electrode, titanium, or the like may be used. The foam metal may be foam nickel, foam copper, foam aluminum, foam alloy, or the like. The composite current collector may include a polymer material base layer and a metal layer. The composite current collector may be fabricated by forming a metal material (copper, copper alloy, nickel, nickel alloy, titanium, titanium alloy, silver and silver alloy, etc.) on a polymer material substrate (such as a substrate made of polypropylene, polyethylene terephthalate, polybutylene terephthalate, polystyrene, and polyethylene).

As an example, a negative electrode active material for use in the pouch battery cell 30 known in the art may be used as the negative electrode active material. As an example, the negative electrode active material may include at least one of the following materials: a carbon material (e.g., at least one of artificial graphite, natural graphite, soft carbon, and hard carbon), a silicon-based material, a tin-based material, lithium titanate, and the like. The silicon-based material may include at least one of elemental silicon, a silicon-oxygen compound, a silicon-carbon composite, a silicon-nitrogen composite, and a silicon alloy. The tin-based material may include at least one of elemental tin, a tin-oxygen compound, and a tin alloy. However, the present application is not limited to these materials, and other traditional materials that can be used as negative electrode film layers for batteries may also be used. These negative electrode film layers may be used alone or in combination of two or more.

In some embodiments, the negative electrode active material includes silicon element. The silicon element may be present in the form of a silicon-based material. For example, the silicon-based material may include at least one of elemental silicon, a silicon-oxygen compound, a silicon-carbon composite, a silicon-nitrogen composite, and a silicon alloy. Due to the introduction of the silicon element, the energy density of the pouch battery cell 30 can be improved.

In some embodiments, the mass content of the silicon element in the negative electrode film layer is 1 wt% to 32 wt%, optionally 2 wt% to 19 wt%, and further optionally 6 wt% to 13 wt%. Under the system of the pouch battery cell 30, when the mass content of the silicon element is within the above range, the energy density of the pouch battery cell 30 can be increased.

In the embodiments of the present application, the mass content of the silicon element in the negative electrode film layer has the meaning known in the art and can be detected by using devices and methods known in the art. For example, by soaking the negative electrode plate in a solvent such as water to separate the negative electrode active material from the negative electrode current collector, performing suction filtration to obtain the negative electrode active material, using the inductively coupled plasma optical emission spectrometer, with the model ICAP7400, of Thermo Fisher Scientific Inc., USA, to conduct detection on the negative electrode active material, and referring to the GB/T30902-2014 standard, the mass content of the silicon element can be obtained.

In some embodiments, the negative electrode film layer further optionally includes a negative electrode conductive agent. The embodiments of the present application do not particularly limit the type of the negative electrode conductive agent. As an example, the negative electrode conductive agent may include at least one of superconducting carbon, conductive graphite, acetylene black, carbon black, Ketjen black, a carbon dot, a carbon nanotube, graphene, and a carbon nanofiber. In some embodiments, the mass percentage of the negative electrode conductive agent in the negative electrode film layer is ≤ 5 wt%.

In some embodiments, the negative electrode film layer further optionally includes a negative electrode binder. The embodiments of the present application do not particularly limit the type of the negative electrode binder. As an example, the negative electrode binder may include at least one of styrene-butadiene rubber (SBR), water-soluble unsaturated resin SR-1B, aqueous acrylic resin (e.g., polyacrylic acid PAA, polymethacrylic acid PMAA, or sodium polyacrylate PAAS), polyacrylamide (PAM), polyvinyl alcohol (PVA), sodium alginate (SA), and carboxymethyl chitosan (CMCS). In some embodiments, the mass percentage of the negative electrode binder in the negative electrode film layer is ≤ 5%.

In some embodiments, the negative electrode film layer further optionally includes other auxiliary agents. As an example, other auxiliary agents may include a thickener, such as sodium carboxymethylcellulose (CMC-Na) or a PTC thermistor material. In some embodiments, the mass percentage of the other auxiliary agents in the negative electrode film layer is ≤ 2 wt%.

In some embodiments, the material of the positive electrode current collector may be aluminum, and the material of the negative electrode current collector may be copper.

In some embodiments, the separator includes a separation film. The present application does not particularly limit the type of the separation film, and any porous-structure separation film known to have good chemical stability and mechanical stability may be selected and used.

The embodiments of the present application do not particularly limit the type of the separation film, and any porous-structure separation film known to have good chemical stability and mechanical stability may be selected and used.

In some embodiments, the material of the separation film may include one or more of glass fiber, non-woven fabric, polyethylene, polypropylene, and polyvinylidene fluoride. The separation film may be a single-layer film or a multi-layer composite film, and there is no particular limitation on this. When the separation film is a multi-layer composite film, the materials of the layers may be the same or different, and there is no particular limitation on this.

In some embodiments, the separation film may include a porous base film and a coating disposed on at least one side of the porous base film, and the coating may include at least one of inorganic particles or organic particles.

The porous base film may include one or more of polyethylene and polypropylene.

The inorganic particles have relatively good heat resistance and can improve the overall heat resistance of the separation film. When within the operating voltage range of the sodium-ion battery, the inorganic particles basically do not undergo oxidation reactions and reduction reactions with metal dendrites. In other words, the inorganic particles are configured to not undergo oxidation reactions and reduction reactions with the alkali metal and/or alkaline earth metal at a nominal voltage of the sodium-ion battery.

In some embodiments, the inorganic particles include one or more of boehmite γ-AlOOH, aluminum oxide Al₂O₃, aluminum hydroxide Al(OH)₃, barium sulfate BaSO₄, magnesium oxide MgO, magnesium hydroxide Mg(OH)₂, calcium oxide CaO, cerium oxide CeO₂, zirconium titanate SrTiO₃, barium titanate BaTiO₃, and magnesium fluoride MgF₂.

In some embodiments, the organic particles include at least one of polystyrene, polyethylene, polyimide, melamine resin, phenolic resin, polypropylene, polyesters (e.g., polyethylene terephthalate, polyethylene naphthalate, and polybutylene terephthalate), polyphenylene sulfide, polyaramide, polyamideimide, polyimide, a copolymer of butyl acrylate and ethyl methacrylate, and a mixture thereof.

In some embodiments, the pouch battery cell 30 further includes an electrolytic solution.

During the charging and discharging processes of the cell, active ions are intercalated and deintercalated back and forth between the positive electrode plate and the negative electrode plate, and the electrolytic solution serves to conduct the active ions between the positive electrode plate and the negative electrode plate. The embodiments of the present application do not particularly limit the type of the electrolytic solution, which can be selected based on actual needs.

The electrolytic solution includes an electrolyte salt and a solvent. The types of the electrolyte salt and the solvent are not particularly limited, and a choice can be made based on actual needs.

In some embodiments, the electrolytic solution further optionally includes an additive. For example, the additive may include a negative electrode film-forming additive, or may include a positive electrode film-forming additive, or may include an additive capable of improving certain properties of the battery, such as an additive for improving the overcharge performance of the battery, an additive for improving the high-temperature performance of the battery, or an additive for improving the low-temperature power performance of the battery.

For example, the additive includes at least one of a cyclic carbonate compound containing unsaturated bonds, a sulfate compound, a sulfite compound, a sultone compound, a disulfonic acid compound, a nitrile compound, an aromatic compound, an isocyanate compound, a phosphazene compound, anhydride, a cyclic anhydride compound, a phosphite compound, a phosphate compound, a borate, and a carboxylate compound.

It can be understood that when the pouch battery cell 30 is a lithium iron phosphate cell, in the positive electrode material of the pouch battery cell 30, the positive electrode active material accounts for 96 parts of the total weight of the positive electrode material, the binder accounts for 1-3 (for example, it may include, but is not limited to, 1, 1.2, 1.5, 1.8, 2, 2.2, 2.5, 2.8, 3, etc.) parts of the total weight of the positive electrode material, and the conductive agent accounts for 1-3 (for example, it may be, but is not limited to, 1, 1.2, 1.5, 1.8, 2, 2.2, 2.5, 2.8, 3, etc.) parts of the total weight of the positive electrode material.

Illustratively, when the pouch battery cell 30 is a lithium iron phosphate cell, the positive electrode active material is LFP (which may refer to LiFePO4, i.e., lithium iron phosphate), the binder may be PVDF (polyvinylidene fluoride), and the conductive agent may be conductive carbon black. The ratio of LFP:PVDF:conductive carbon black may be 96:2:2; that is, the total weight of the positive electrode active material is divided into 100 parts, in which LFP accounts for 96 parts, PVDF accounts for 2 parts, and the conductive carbon black accounts for 2 parts. The weight of the positive electrode active material may be measured in grams.

When the pouch battery cell 30 is a ternary cell, in the positive electrode material of the pouch battery cell 30, the positive electrode active material accounts for 96 parts of the total weight of the positive electrode material, the binder accounts for 2-3 (for example, it may include, but is not limited to, 2, 2.2, 2.5, 2.8, 3, etc.) parts of the total weight of the positive electrode material, and the conductive agent accounts for 1-2 (for example, it may include, but is not limited to, 1, 1.2, 1.5, 1.8, 2, etc.) parts of the total weight of the positive electrode material. The ternary cell may be, but is not limited to, lithium nickel cobalt manganate-based materials, lithium nickel cobalt aluminate-based materials, and the like.

Illustratively, the ternary material of the ternary cell may be eight-series LiNi_{0.8}Co_{0.1}Mn_{0.1}O₂, and the ratio of the weight parts of the positive electrode active material, the binder, and the conductive agent is 96:2.5:1.5, that is, the total weight of the positive electrode material is divided into 100 parts, in which the eight-series LiNi_{0.8}Co_{0.1}Mn_{0.1}O₂ accounts for 96 parts, the binder accounts for 2.5 parts, and the conductive agent accounts for 1.5 parts.

In the above technical solution, when the pouch battery cell 30 is a lithium iron phosphate cell, the high proportion of the positive electrode active material means that a greater amount of electrochemically reactive materials may be accommodated within the limited electrode assembly, which is beneficial to increasing the capacity and energy density of the battery apparatus 100, such that the lithium iron phosphate cell can output a higher amount of electricity while maintaining relatively small volume and weight, making it suitable for application scenarios requiring a certain level of energy density. In addition, when the amounts of the binder and the conductive agent are within the aforementioned ranges, the cost of auxiliary materials can be reduced, thus reducing the overall cost of the battery apparatus 100. When the pouch battery cell 30 is a ternary cell, due to the relatively complex structure and surface properties of the ternary material, using the aforementioned ratio of the positive electrode active material, the binder, and the conductive agent ensures the firm bonding between the positive electrode active material particles and between the active material and the current collector, such that the mechanical stability and structural integrity of the electrode assembly are improved, and the risk of the active material detachment and electrode pulverization during the charging and discharging processes are reduced, thereby extending the cycle life of the battery apparatus 100.

In a second aspect, referring to FIG. 1 again, an embodiment of the present application provides an electric apparatus. The electric apparatus includes the battery apparatus 100 of any one of the above embodiments, and the battery apparatus 100 is used for providing electric energy.

The electric apparatus may be the vehicle 1000, and the battery apparatus 100 may be installed on the bottom of the vehicle body.

In the electric apparatus of the technical solution of the present application, at least two adjacent sampling parts 81 can acquire parameters of two or more pouch battery cells 30, such that the number of the sampling parts 81 can be correspondingly reduced, the wire harness connected to the sampling parts 81 can be shortened and simplified, and thereby the structure of the battery apparatus 100 is more compact, the space is saved, the energy density of the battery apparatus 100 is improved, and the cost can be reduced to some extent.

Finally, it should be noted that the above embodiments are only used to illustrate the technical solutions of the present application, but not to limit them. Although the present application has been described in detail with reference to the foregoing embodiments, those of ordinary skill in the art should understand that they can still modify the technical solutions recorded in the foregoing embodiments or make equivalent substitutions for some or all of the technical features; however, these modifications or substitutions do not make the essence of the corresponding technical solutions deviate from the spirit and scope of the technical solutions in the embodiments of the present application, and these modifications or substitutions shall all fall within the scope of claims and specification of the present application. In particular, the technical features mentioned in the embodiments may be combined in any manner as long as there are no structural conflicts. The present application is not limited to the specific embodiments disclosed herein, but encompasses all technical solutions falling within the scope of the claims.

## Claims

1. A battery apparatus, comprising:
a case;
a pouch battery cell assembly, wherein the pouch battery cell assembly comprises a plurality of pouch battery cells arranged along a first direction, each of the pouch battery cells is bonded to the case and comprises a packaging bag and electrode leads, and the electrode leads are respectively disposed at end parts of the packaging bag along a second direction; all the electrode leads of the plurality of pouch battery cells of the pouch battery cell assembly located at the same side are sequentially arranged along the first direction, and along a third direction, an accommodating gap is formed between a plurality of the electrode leads and an end part of the pouch battery cell assembly; and
an electrical member, disposed in the accommodating gap and electrically connected to the electrode leads;
wherein every two of the first direction, the second direction, and the third direction are arranged at an included angle to each other.

2. The battery apparatus according to claim 1, wherein the electrical member comprises a battery monitoring unit and/or an electrical connecting member.

3. The battery apparatus according to claim 1 or 2, wherein the electrical member comprises the battery monitoring unit and the electrical connecting member, the electrical connecting member is located between the electrode leads and the battery monitoring unit, and the electrical connecting member electrically connects the battery monitoring unit and the electrode leads.

4. The battery apparatus according to any one of claims 1 to 3, wherein the battery apparatus comprises a main control panel, the electrical member comprises the battery monitoring unit, and the battery monitoring unit is electrically connected to the main control panel.

5. The battery apparatus according to any one of claims 1 to 4, wherein the case comprises a bottom plate, and the accommodating gap is located between the bottom plate and the electrode leads.

6. The battery apparatus according to claim 5, wherein the battery apparatus comprises a support connected to the case, and the electrical member is installed on the support.

7. The battery apparatus according to any one of claims 1 to 6, wherein the electrical member is bonded to a case wall of the case.

8. The battery apparatus according to any one of claims 1 to 7, wherein the electrical member comprises the battery monitoring unit, and a length of the battery monitoring unit extends along the first direction.

9. The battery apparatus according to any one of claims 1 to 8, wherein a plurality of pouch battery cell assemblies are provided, the plurality of pouch battery cell assemblies are arranged along the second direction, and the electrical member is disposed between two of the pouch battery cell assemblies or disposed at one side of all the pouch battery cell assemblies.

10. The battery apparatus according to any one of claims 1 to 9, wherein the electrical member comprises the battery monitoring unit, and at least one of the electrode leads of each pouch battery cell is electrically connected to the battery monitoring unit through a conductive member.

11. The battery apparatus according to claim 10, wherein a corner space is formed at a corner of the packaging bag along the third direction, the conductive member is at least partially located in the corner space, and the conductive member extends along the second direction.

12. The battery apparatus according to claim 9 or 10, wherein the conductive member comprises a first end part and a second end part opposite to each other, the first end part is welded or bonded to the electrode lead, and the second end part is electrically connected to the battery monitoring unit.

13. The battery apparatus according to claim 12, wherein the electrical member comprises the electrical connecting member, the battery apparatus comprises first patch cords and a second patch cord, the first patch cords and the second patch cord are all connected to the electrical connecting member, the second end parts of a plurality of the conductive members are connected to the electrical connecting member through corresponding first patch cords, and an end of the second patch cord distal to the electrical connecting member is connected to the battery monitoring unit.

14. The battery apparatus according to claim 13, wherein the second patch cord has a first connector connected at an end thereof distal to the electrical connecting member, the battery monitoring unit is provided with a second connector, and the first connector is in plug connection with the second connector.

15. The battery apparatus according to any one of claims 10 to 14, wherein the conductive member is at least one of a flexible circuit board and a wire harness.

16. The battery apparatus according to any one of claims 1 to 15, wherein the electrical member comprises the battery monitoring unit, all the pouch battery cells are arranged in series, and the battery monitoring unit acquires parameters of the pouch battery cells through sampling parts connected to the electrode leads.

17. The battery apparatus according to claim 16, wherein on the current path, a number of the pouch battery cells between at least two adjacent sampling parts is greater than or equal to two.

18. The battery apparatus according to claim 16 or 17, wherein on the current path, two electrode leads of a first one of the pouch battery cells and two electrode leads of a last one of the pouch battery cells all have the sampling part connected.

19. The battery apparatus according to claim 18, wherein on the current path, between the first one of the pouch battery cells and the last one of the pouch battery cells, there are two pouch battery cells between two adjacent sampling parts.

20. The battery apparatus according to any one of claims 16 to 19, wherein at least one electrode lead of each pouch battery cell is electrically connected to the battery monitoring unit through the conductive member, the conductive member comprises the first end part and the second end part opposite to each other, and the first end part forms the sampling part.

21. The battery apparatus according to any one of claims 1 to 20, wherein in the first direction, a reinforcing partition plate is sandwiched between at least two adjacent pouch battery cells, the reinforcing partition plate is connected to the packaging bag, and a hardness of the reinforcing partition plate is greater than a hardness of the packaging bag.

22. The battery apparatus according to claim 21, wherein a thickness of the reinforcing partition plate is less than a thickness of the pouch battery cell.

23. The battery apparatus according to any one of claims 21 or 22, wherein the reinforcing partition plate is a metal plate.

24. The battery apparatus according to any one of claims 21 to 23, wherein the reinforcing partition plate is a heat-conducting member and is in heat conducting connection with the packaging bag.

25. The battery apparatus according to any one of claims 21 to 24, wherein the reinforcing partition plate is a solid structure.

26. The battery apparatus according to any one of claims 21 to 24, wherein the reinforcing partition plate has a cavity formed therein.

27. The battery apparatus according to claim 26, wherein the cavity comprises a heat exchange flow channel for flow of a heat exchange medium.

28. The battery apparatus according to any one of claims 21 to 27, wherein the reinforcing partition plate comprises a connecting part protruding with respect to the packaging bag along the second direction, and the connecting part is located at a side of the electrode lead facing away from the electrical member.

29. The battery apparatus according to any one of claims 21 to 28, wherein in the first direction, two adjacent reinforcing partition plates are connected by a connecting plate, and the pouch battery cell is accommodated in a space formed by enclosure of the connecting plate and two reinforcing partition plates.

30. The battery apparatus according to claim 29, wherein two adjacent reinforcing partition plates in the first direction and the connecting plate connected thereto are integrally formed.

31. The battery apparatus according to any one of claims 1 to 30, wherein the electrode leads of two adjacent pouch battery cells are directly connected.

32. The battery apparatus according to claim 31, wherein the electrode leads of two adjacent pouch battery cells are connected by welding.

33. The battery apparatus according to claim 31 or 32, wherein the electrode leads of two adjacent pouch battery cells are directly connected by a conductive adhesive.

34. The battery apparatus according to any one of claims 1 to 33, wherein a plurality of the pouch battery cells are sequentially bonded and matched along the first direction, the pouch battery cell has a first face and a second face, and the second face is adjacent to the first face;
the battery apparatus comprises a glue layer and a blocking member, wherein the glue layer is disposed on one side of the pouch battery cell assembly where the first faces are located and is used for bonding the plurality of pouch battery cells to the case, and the blocking member is located at least between at least one of the pouch battery cells at each of two ends of the pouch battery cell assembly in the first direction and the glue layer and is used for preventing overflow of the glue layer from the first face of the pouch battery cell to the second face of a corresponding pouch battery cell.

35. The battery apparatus according to claim 34, wherein the blocking member covers at least a corner of the corresponding pouch battery cell.

36. The battery apparatus according to claim 34, wherein the blocking member covers at least edge regions of the corresponding pouch battery cell in the first direction.

37. The battery apparatus according to any one of claims 34 to 36, wherein one blocking member is disposed between two adjacent pouch battery cells along the first direction.

38. The battery apparatus according to any one of claims 1 to 37, wherein the pouch battery cell is any one of a lithium iron phosphate cell, a ternary cell, and a solid-state cell.

39. The battery apparatus according to any one of claims 1 to 37, wherein the pouch battery cell is a lithium iron phosphate cell, and in a positive electrode material of the pouch battery cell, an amount ratio of a positive electrode active material, a binder, and a conductive agent is 96:(1-3):(1-3); the pouch battery cell is a ternary cell, and in a positive electrode material of the pouch battery cell, an amount ratio of a positive electrode active material, a binder, and a conductive agent is 96:(2-3):(1-2).

40. An electric apparatus, comprising the battery apparatus according to any one of claims 1 to 39, the battery apparatus being used for providing electric energy.
